# EUROPEAN PATENT APPLICATION

(11) **EP 1 895 458 A1**
(43) Date of publication of application: **05.03.2008**
(21) Application number: 07015773.0
(22) Date of filing: 10.08.2007
(51) Int. Cl.: G06Q 10/00

(54) **Routing a mail piece in a delivery system**

(30) Priority: 11.08.2006 US 502770
(71) Applicant: Pitney Bowes, Inc., Stamford, CT 06926-0700 (US)
(72) Inventor: Foth, Thomas J, Trumbull, Conneticut 06611 (US); Malandra, Charles R. jr., Monroe, Conneticut 06468 (US); Rosenkranz, Thomas H., Dover Plains, New York 12522 (US); Ryan, Frederick W. jr, Oxford, Conneticut 06476 (US)
(74) Representative: HOFFMANN EITLE

(57) **Abstract**

A method of routing a mail piece (16) in a delivery system (10) includes receiving the mail piece (16) by a delivery service provider (12); initially moving the mail piece (16) in a delivery stream of the delivery service provider (12) towards a first delivery address (20); after the mail piece has at least partially completed transit in the delivery stream of the delivery service provider (12), scanning the mail piece (16) by the delivery service provider (12) to determine a mail piece identifier of the mail piece (16); determining a new delivery address (68) of the mail piece (16) by the delivery service provider (12) based upon the scanned mail piece identifier and information supplied to the delivery service provider (12) after initial moving of the mail piece in the delivery stream of the delivery service provider (12); and delivering the mail piece to the new delivery address (68).

## Description

The invention relates to a delivery system and, more particularly, to routing a mail piece in a delivery system.

Return merchandise and/or rental inventory is typically shipped to a central location, repackaged and redistributed. The processing of returned merchandise is costly both in terms of processing cost (manual labor, facilities) and time (while the inventory is being processed it is not generating revenue).

Recently, business models have evolved which require the continuous dispatch and return of items between a company and its customers. One example of such a business model is that employed by Netflix, Inc. at www.netfllx.com (hereinafter "Netflix"). Netflix allows its customers to rent a digital video disk (DVD). To accomplish this, Netflix maintains an inventory of DVDs of different video content, such as movies. Generally, customers request a particular DVD title and once Netflix locates the particular DVD title, Netflix dispatches it to the customer via a public or private carrier for delivery. Then, when the customer is finished with the particular DVD title or is required to return it, the customer provides it to the carrier in a special envelope (bar-coded and return delivery charges paid) for return to Netflix. Once returned, the particular DVD title can be made available to another customer and the process repeats itself.

This business model requires a sophisticated logistics operation. Streamlining the logistics is a critical part of the cost structure of the business relating to inventory control and management. Furthermore, the logistics are unique in that every item that is selected, packed and dispatched is also expected to be returned. This is very different from a sales based business model where only a fraction of the dispatched items are returned. The efficient handling of these dispatches and returns which arrive back in essentially random order becomes a critical competency that the company must possess. The more efficient that the logistics operations are the less capital investment that is required to purchase an inventory of sufficient size to satisfy the demand of the customers.

Additionally, to increase efficiency a system of regional distribution centers may be created to replace a single distribution center that services the entire country. For example, a network of distribution centers across the country decreases shipping times for both the original dispatch and the return because the distances traveled have been shortened. A far-flung distribution system, however, requires sophisticated systems to track inventory for even greater efficiencies. The various distribution centers may communicate and determine the fastest way to get items into customers' hands. For example, an order placed by a customer in one city will be assigned to the closest distribution center. If the item is not available at that distribution center, the system can poll the next-closest distribution center. If that center doesn't have it, the system can contact the next closest, and so on until the item is located. But, balancing inventory between the distribution centers is difficult.

In accordance with one aspect of the invention, a method of routing a mail piece in a delivery system includes receiving the mail piece by a delivery service provider; initially moving the mail piece in a delivery stream of the delivery service provider towards a first delivery address; after the mail piece has at least partially completed transit in the delivery stream of the delivery service provider, scanning the mail piece by the delivery service provider to determine a mail piece identifier of the mail piece; determining a new delivery address of the mail piece by the delivery service provider based upon the scanned mail piece identifier and information supplied to the delivery service provider after initial moving of the mail piece in the delivery stream of the delivery service provider; and delivering the mail piece to the new delivery address.

In accordance with another aspect of the invention, a method of using a delivery service provider for controlling inventory is provided comprising introducing a plurality of products into a delivery stream of the delivery service provider; providing a list to the delivery service provider of delivery addresses of first addressees for the products to be delivered to; and updating the delivery addresses of at least some of the products with delivery addresses of new respective addressees, and providing the updated delivery addresses to the delivery service provider thereby directing the delivery service provider to deliver the products to the new addressees when the products are re-introduced into the delivery stream by the first addressees.

The foregoing aspects and other features of the invention are explained in the following description, taken in connection with the accompanying drawings, wherein:

Fig. 1 is a schematic chart showing an example of some delivery stream paths of a system and method incorporation features of the invention;

Fig. 2 is an exploded perspective view of an example of a mail piece for use with the method and system shown in Fig. 1;

Fig. 3 is a front view of a DVD of the mail piece shown in Fig. 2;

Fig. 4 is a diagram showing some components of system which can be used by a delivery service provider for use with the invention;

Fig. 5 is a flow diagram showing an example of some steps of the invention which could be used by a rentee;

Fig. 6 is a flow diagram showing an example of some steps of the invention which could be used by a delivery service provider;

Fig. 7 is a flow chart showing an example of some steps of the invention shown in Fig. 1;

Fig. 8 is a flow chart illustrating steps which could be used to practice the invention;

Fig. 9 is a diagram illustrating some components which could be used by a rentee for practicing some steps of the invention;

Fig. 10 is a flow chart of some steps which could be used by an owner/renter for practicing some of the features of the invention;

Fig. 11 is a block diagram illustrating connection of the renter computer to the computer of the delivery service provider, and showing the connection of a scanner to the computer of the delivery service provider;

Fig. 12 is a block diagram illustrating some components of the delivery service provider computer shown in Fig. 11;

Fig. 13 is a block diagram illustrating some components of the renter computer shown in Fig. 11;

Fig. 14 is a diagram showing an example of communication connections among various parties;

Fig. 15 is a block diagram showing steps which could be used in a computer of the delivery service provider;

Fig. 16 is a flow chart showing steps which could be used in the renter computer;

Fig. 17 is a flow chart showing steps which could be used in the delivery service provider computer;

Fig. 18 is a flow chart of steps which could be used in the renter computer; and

Fig. 19 is a block diagram showing functional modules which could be used the renter computer.

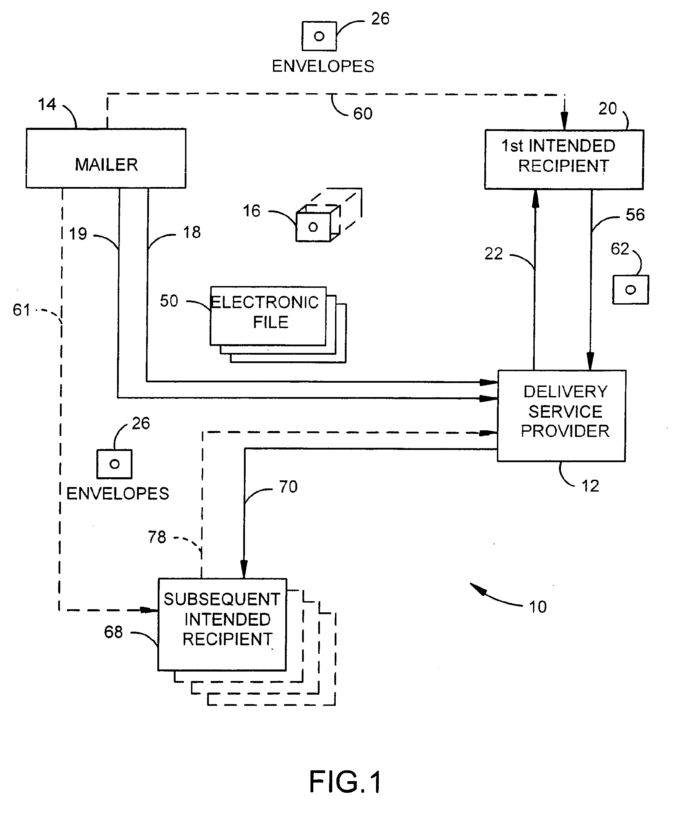

Referring to Fig. 1, there is shown a diagram of a combined delivery system and virtual inventory system 10 incorporating features of the invention. Although the invention will be described with reference to the exemplary embodiments shown in the drawings, it should be understood that the invention can be embodied in many alternate forms of embodiments. For example, features of the invention could be used in a delivery system without also having a virtual inventory component.

The system 10 generally comprises a delivery service provider or carrier 12 and various deliveries and communications between the delivery service provider 12 and other different parties. The delivery service provider 12 could comprise any suitable type of physical mail or package delivery service provider(s) including, for example, a government post or mail service provider such as the U.S. Postal Service (USPS) or a courier such as Federal Express, DHL or United Parcel Service (UPS). The delivery service provider 12 could comprise combinations of more than one public and/or private delivery service providers, such as different ones of the delivery service providers at different times during a delivery.

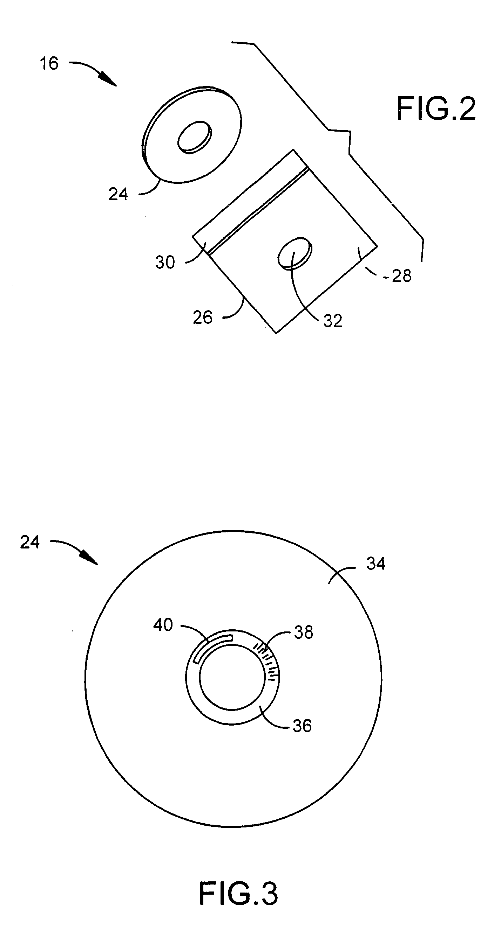

In the example shown in Fig. 1, a owner/renter 14, who is also a mailer in this example, gives the delivery service provider 12 at least one mail piece 16 as indicated by arrow 18 for delivery by the delivery service provider 12 to a first intended recipient 20 as indicated by arrow 22. The mail piece 16 generally comprises a product or article contained inside packaging, such as an envelope. Referring also to Fig. 2, one example of the mail piece 16 is shown. In this example the article 24 comprises a Digital Video Disk (DVD) and the packaging 26 comprises an envelope. In an alternate embodiment the article 24 could comprise any suitable product or article including, for example, a music CD, a book, a computer game cartridge, sports equipment, a tuxedo, or just about any product which might be used by more than one person through a rental channel of trade.

As used herein, the term "renter" refers to an entity renting an article to a "rentee", and "rentee" generally refers to a person or entity renting an article from the "renter". Features of the invention could be used with other products or article other than customarily used in a rental channel of trade, such as for products which need servicing, refurbishing, cleaning, etc. which then might not need to be returned to the original user, such as a computer ink cartridge for example.

In the embodiment shown in Fig. 2, the envelope 26 forms a pocket 28 for receiving the DVD 24 and a flap 30 which can be sealed to enclose the DVD 24 inside the pocket. The envelope 26 has two windows 32 located on opposite sides. The windows 32 allow visual access to a portion of the DVD 24 when the DVD is located in the pocket 28. Referring also to Fig. 3, the DVD has a content area 34 and a hub 36. As is known in the DVD art, the content area comprises entertainment data stored in an optical disk digital format for reading by a DVD player. The hub area 36 provides an area for the DVD player to hold the DVD for spinning the DVD. When the DVD 24 is located in the pocket 28, the hub area 36 is viewable through the windows 32. In an alternate embodiment the envelope 26 might comprise only one window, however, having two windows on opposite sides of the envelope 26 allows the DVD 24 to be inserted in two orientations without interfering with viewing of data on the hub 36 from outside the envelope.

In the embodiment shown, the hub 36 is provided with an article identifier 38. The identifier 38 identifies the article 24 such as a DVD of a particular movie, such as "The Sound of Music". In the embodiment shown the identifier comprises a curved bar code. However, in alternate embodiments any suitable visually observable machine readable code could be provided on the hub 36. In one type of alternate embodiment, the hub 36 could additionally or alternatively comprise a radio frequency identification (RFID) tag 40 on the hub. With the use of a RFID tag, the package 26 does not need windows 32. The RFID tag can be read directly through the packaging 26. The code 38/40 does not contain a delivery address. It can merely comprise an identification number or article identification for example.

The invention can provide features directed to altering processing of mail in order to facilitate a virtual inventory. Different types of modalities could be used to identify articles in the delivery stream. For example, as described above, for a DVD a 2D Barcode could be placed on the inner ring of the DVD. The barcode could be scanned through a window in an envelope containing the DVD. Barcode and windows can be on both sides. A florescence marking could be provided on the DVD to enable facing (orienting) while being processed in the mail. A RFID marking could be placed on the article for uniquely identifying the article to be mailed and re-routed, or to be monitored by a home media center.

In the DVD example, in some cases it may not be possible to position a clear window on the front of the envelope. In such a case the delivery service could use a 2-step process for scanning code on the DVD, where only one window is on the back of the envelope. First, the mail piece could pass to identify the DVD envelope. Second, the mail piece could pass to flip the mail piece and to read the code through the back window.

The invention can use control re-routing using the code on the item showing through the window of an envelope (or otherwise readable without removing the article from the mail piece packaging such as with a RFID tag) or package that otherwise does not have a delivery address on it. This creates what appears to be an anonymous delivery address mail piece. Existing automated postal equipment could be used to bundle the anonymous delivery address mail piece with the rest of an intended recipient's mail, and the bundle is delivered to the recipient's address. If the anonymous delivery address mail piece comes loose, a delivery person could be equipped with a scanner to re-scan the item to determine to whom it should be delivered.

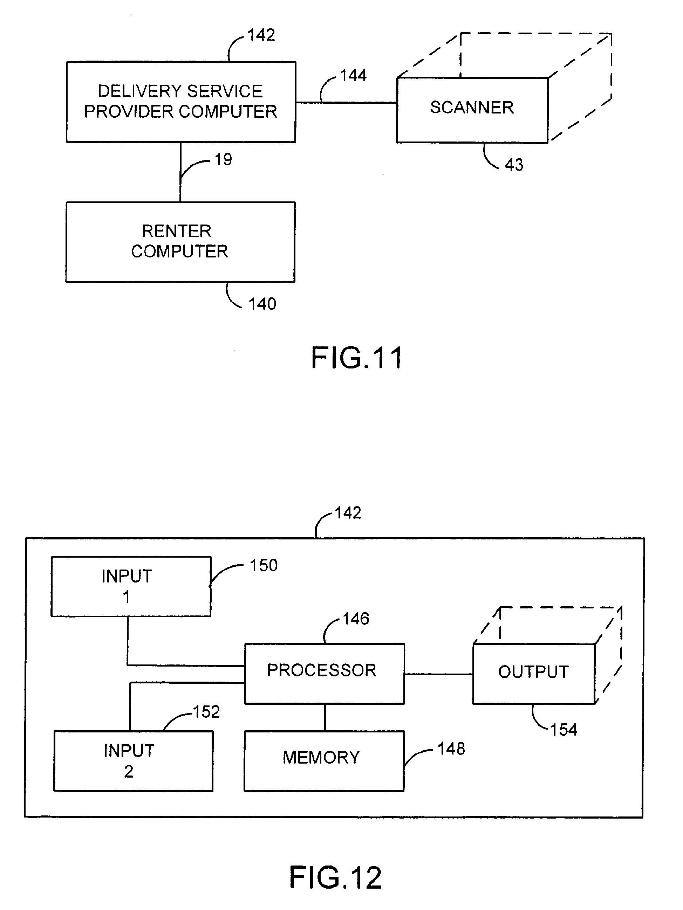

Referring back to Fig. 1, when the mail piece 16 is initially mailed by the owner/renter 14, the mail piece could comprise a delivery address for the first intended recipient 20 on the mail piece 16 which is a human readable form of delivery address and is easily viewable from the exterior of the mail piece. If this is the case, than the mail piece 16 can be delivered by the delivery service provider 12 to the first intended recipient 20 as indicated by arrow 22. However, in one type of embodiment the mail piece 16 could be given to the delivery service provider 12 by the owner/renter 14 without a human readable form of the delivery address viewable from the exterior of the mail piece. In this case, the delivery service provider 12 can use the article identifier 38 and/or 40 (referred to hereinafter merely as numeral "38") to identify an item and determine the delivery address for mail piece 16 based upon additional information provided by the owner/renter. For example, owner/renter 14 could provide delivery service provider 12 with an electronic file 50 via communication link 19. Communication link 19 may be electronic or physical (e.g., a CD). As seen with reference to Fig. 11, in one embodiment the communication link 19 can connect the computer 140 of the renter 14 with the computer 142 of the delivery service provider 12. The delivery service provider computer 142 is coupled to one or more scanners 43 of the scanner system 42 by at least one link 144. The link 144 could include a wireless link, such as with a mail carrier in the field having a hand-held portable scanner, and/or a wired link, such as in a mail routing facility having a stationary scanner in-line in an automated mail stream handling path. File 50 may contain a mapping of identifier-to-delivery addresses.

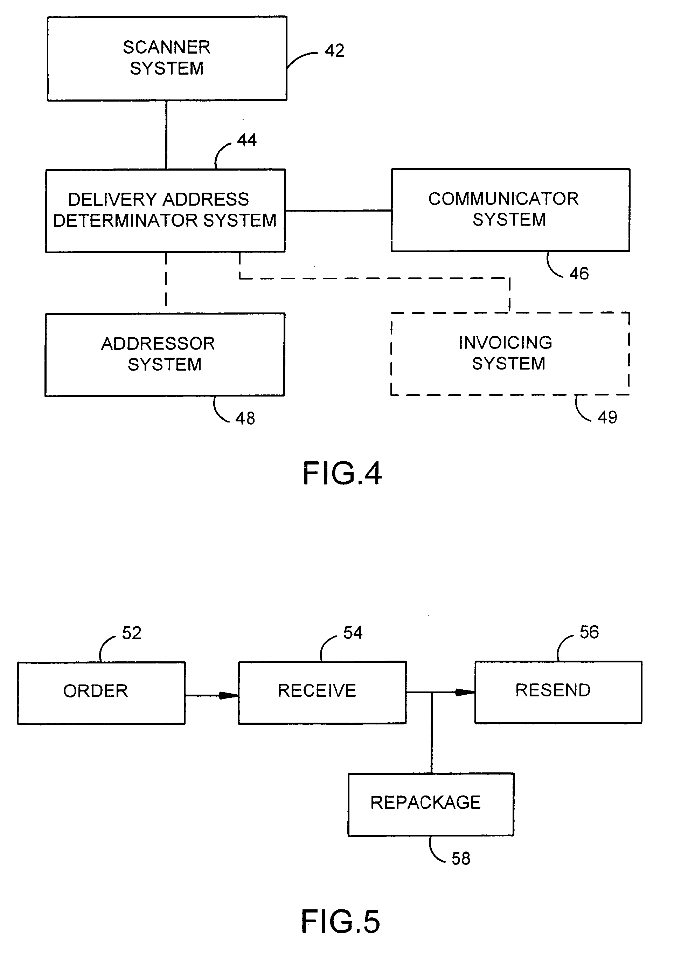

Referring also to Fig. 4, the delivery service provider 12 preferably comprises a scanner system 42, a delivery address determinator system 44, a communication system 46, and an optional addressor system 48. The delivery service provider 12 can also comprise an invoicing system such as, for example, for the invoicing of the renter 14 or the rentee 20, 68 for the rentee-to-rentee delivery services.

The scanner system 42 is adapted to read the article identifier 38 while the article 24 is inside the mail piece packaging 26. For example, if the article identifier 38 is a bar code viewable through the window 32, the scanner system 42 could include a bar code reader. As another example, if the article identifier 38 is a RFID tag, the scanner system 42 could include an RFID scanner. The scanning system 42 could comprising facing equipment for orientating the mail piece for proper reading of the article identifier 38. Unlike conventional mail piece facing equipment, which determines facing by a marking on the envelope, the scanning system 42 could determine facing by a marking on the article 24, such as the article identifier 38 being printed with fluorescent ink. Alternatively, facing could be determined by presence of a single window 32 on only one side of the envelope. In one type of alternate optical disk embodiment, the article identifier 38 could be printed on the content area 34 of the DVD 24 (such as multiple times about both sides of the DVD content area(s)) in addition to, or as an alternative to, being printed on the hub 36. In this type of embodiment, a proper window would need to be provided in the mail piece packaging 26 to view the article identifier.

Referring also to Fig. 12, the delivery service provider computer 142, which includes the deliver address determinator system 44, generally comprises a processor 146, a memory 148, at least two inputs 150, 152, and at least one output 154. The first input 150 is coupled to the scanning system 42 and scanners 43. This can be used to input the article identification number and perhaps its location. The second input 152 is adapted to receive information from the renter 14, such as a reader for reading the file 50 or via the communications link 19. The memory 148 can store the information received from the inputs 150, 152. The processor 146 can determine the delivery address for an article based upon the data from the inputs 150, 152, and perhaps store that information in the memory 148. The output(s) 154 can be, for example, to an address label printer, and/or a communication link to the renter or the rentee or a third party.

The scanning system 42 is connected to the delivery address determinator system 44. After scanning, the scanned article identifier information can be used by the delivery address determinator system 44 to determine the delivery address for the mail piece 16. In one type of embodiment, the communication system 46 is connected to the delivery address determinator system 44 and is used to supply the delivery address determinator system 44 with information for determining the delivery address for the mail piece. This can be based upon information supplied to the delivery service provider separate from the mail piece 16 itself. In one type of method, the owner/renter 14 communicates an electronic file 50 to the communicator system 46, such as a MAIL.DAT® file. The file 50 could be delivered by hand, or sent to the delivery service provider 12 by email via link 19, or uploaded to a web site of the delivery service provider, for example. The communications between the delivery service provider and the owner/renter 14 via the communicator system 46 could be one-way communications, but is preferably two-way communications.

One use of a MAIL.DAT® file is described in U.S. patent application number 11/321,175, published as 2007/0156416, which is hereby incorporated by reference in its entirety. MAIL.DAT® is a standard embraced by a significant portion of the mail production industry and the USPS. MAIL.DAT® is a relational database of nineteen "connected" files describing characteristics that can exist within a mailing. MAIL.DAT files contain blank user fields which can be used by a mailer. The USPS accepts MAIL.DAT® as an electronic representation of the mailing and as a replacement for the traditional hardcopy documentation. Although a preferred embodiment is described using a MAIL.DAT® file as the electronic file delivered from the owner/renter 14 to the service provider 12, the electronic file might not be a MAIL.DAT® file. The electronic file could comprise any suitable electronic file having information regarding the mail pieces. The invention can also use advance notification of a mail piece and/or contents of a mail piece similar to the systems and methods described in U.S. publication application number 2006/0143033 and 2006/0143032.

The electronic file 50 preferably comprises a correlation or list of article identifications to delivery addresses. For example, the file 50 could comprise a delivery address "1 Smith Road, New York, NY 10003" for article identification No. "123456789", and a delivery address "2 Jones Road, Shelton, CT 06484" for article identification No. "987654321". Thus, by reading the article identification 38 of the mail piece and receiving the electronic file by the communicator system 46, the delivery address determinator system 44 can use these two pieces of information to determine the intended delivery address of the mail piece 16. In one type of preferred embodiment, each article has a unique article identifier. For example, two different copies of the DVD of "The Sound of Music" could have different article identifiers. In a preferred embodiment the copies have different article identifiers to enable the ability to track use and possible damage of each particular article individually. However, in another alternate embodiment, different copies of the same article could have a common article identifier. For example, two copies of the DVD "The Sound of Music" could have a same article identifier.

After the delivery address determinator system 44 determines the delivery address for the mail piece (in this example the delivery address of the first intended recipient 20), the delivery service provider 12 can deliver the mail piece 16 as indicated by arrow 22. To help facilitate delivery, the addressor system 48 can be used to place the delivery address on the exterior of the envelope 26, for example, such as by printing a label with the delivery address and placing the label on the envelope. Thus, the process of physically addressing the mail piece (if desired) when introduced into the delivery stream by the mailer (e.g., owner/renter 14), and/or the first intended recipient, and/or a subsequent recipient, can be outsourced to the delivery service provider 12. Alternatively, the first intended recipient and/or a subsequent recipient could perform physical addressing for the next address if desired. In alternate embodiments, any suitable marking or labeling of the envelope 26 could be provided. Alternatively, the mail piece 16 might not be labeled or physically marked by the delivery service provider 12 with the delivery address of the first intended recipient. Instead, the mail piece 16 might merely be placed with other mail to be delivered to the first intended recipient 20 as a batch.

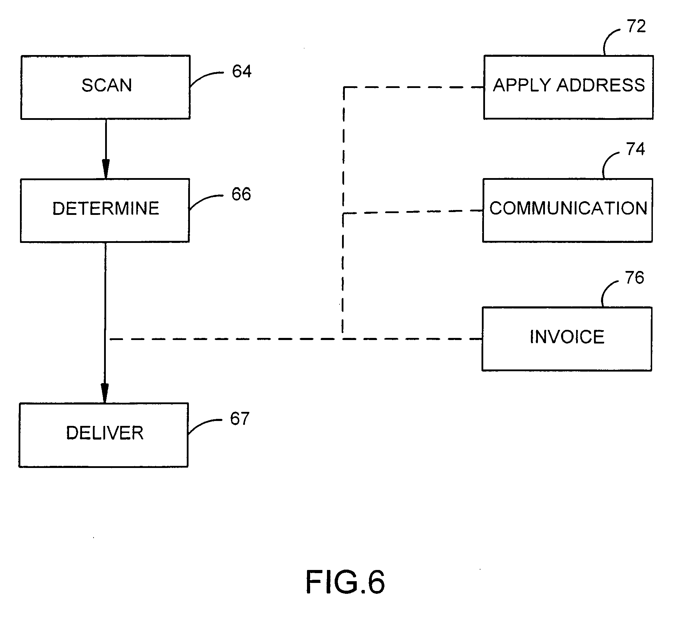

Referring also to Fig. 6, with the invention, a method of delivering a mail piece can be provided comprising scanning the mail piece for a mail piece identifier (such as an article identifier) as indicated by block 64, wherein the mail piece identifier is on a product inside a mail piece packaging of the mail piece, and determining 66 a first mail piece delivery address of the mail piece based upon the mail piece identifier, wherein the mail piece does not contain a human readable form of the mail piece delivery address thereon which can be read from an exterior of the mail piece. Rather than being on the article, the article identifier could be on a packaging of the article inside the mail piece packaging, such as a jewel case of the DVD for example, or on the mail piece itself (e.g., on the envelope).

The mail piece identifier can comprise a machine readable bar code. The mail piece identifier can comprise a radio frequency identification tag. Determining 66 the mail piece delivery address can comprise comparing the mail piece identified to information supplied by an owner of the product to the delivery service provider as indicated by block 74. The information supplied by the owner can comprise an electronic file comprising the mail piece delivery address for the mail piece identifier. The electronic file can be delivered 74 to the delivery service provider at about a same time as delivery of the mail piece to the delivery service provider.

Referring also to Fig. 5, delivery of the article from the owner/renter 14 to the first intended recipient 20 will ordinarily commence upon the first intended recipient placing an order 52 for the article 24. For example, when the article 24 is a DVD the order could be a rental order placed by the Internet via a personal computer of the first intended recipient 20; similar to the movie rental service supplied by NETFLIX, Inc. However, any suitable ordering system could be provided including, for example, by telephone, by text messaging, or by mail. Alternatively, the article might first be picked up at a store by the first customer and subsequently mailed to a second customer by the first customer. In one type of alternate method, the mail piece 16 might be mailed to the first intended recipient 20 without first being ordered by the first intended recipient; such as a promotional mailing, or a scheduled mailing, or with mailing of another article, for example.

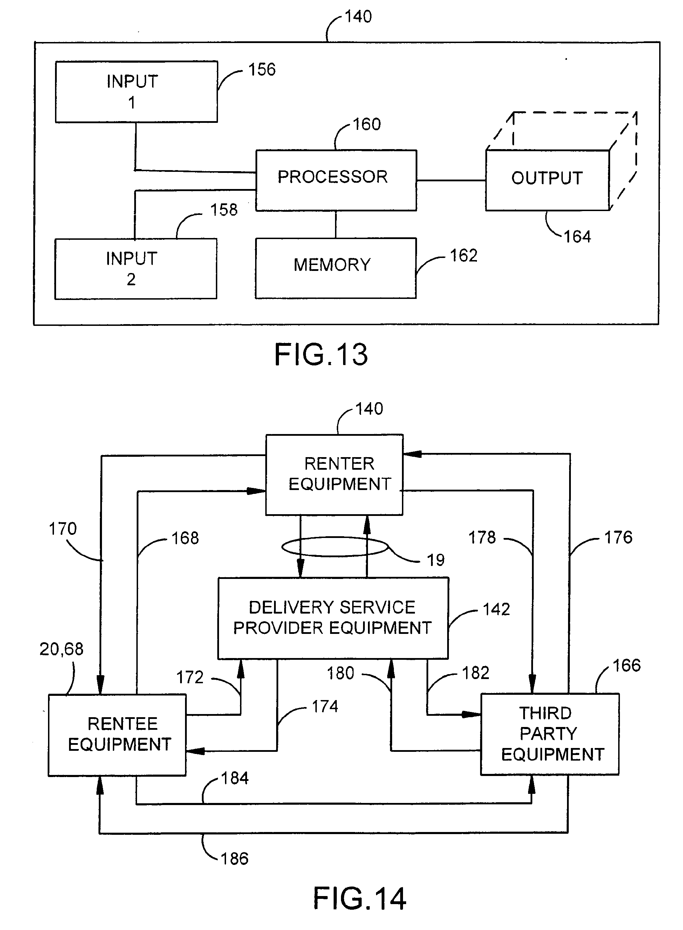

Referring also to Fig. 13, the computer 140 of the renter 14 generally comprises at least two inputs 156, 158, a processor 160, a memory 162 and at least one output 164. The first input 156 can comprise an input for communication from the rentee 20 or 68. The second input can comprise an input for communication from the delivery service provider 12. The memory 162 can store the information received from the inputs 156, 158. The processor 160 can perform various different functions as described herein based upon the data from the inputs 156, 158, and perhaps store that information in the memory 162. The output(s) 164 can be, for example, a communication link to the delivery service provider 12, or the rentee, or a third party.

The mail piece 16 will be received by the first intended recipient 20 as indicated by block 54. If the first intended recipient 20 is unavailable to receive the mail piece 16, such as when the first intended recipient is away on vacation and has placed a hold mail order with the delivery service provider 12, the delivery service provider 12 can take suitable action such as notifying the owner/renter 14 and requesting instructions, or automatically sending the mail piece to a new intended recipient and notifying the owner/renter of this action. An instruction to the delivery service provider from the renter could be an "ongoing" instruction for some circumstances. Thus, the delivery service provider might not need to contact the renter for instructions in certain circumstances. After receipt of the mail piece 16, the first intended recipient 20 can use the article 16 as a rented article; i.e., view the DVD 24. When completed using the article or otherwise desiring to complete rental of the article by the first intended recipient 20, the first intended recipient can resend 56 the article with the delivery service provider 12.

The first intended recipient 20 can use the packaging 26 to resend the article if the packaging 26 is reusable. However, in a preferred embodiment the mail piece packaging is intended to be discarded and the article 24 is intended to be resent by repackaging. The first intended recipient 20 repackages 58 the article 24 in a new packaging. In one type of embodiment, the owner/renter 14 sends the first intended recipient 20 blank envelopes 26 as indicated by arrow 60 in Fig. 1 separate from delivery of the mail piece 16. The blank envelopes 26 could alternatively or additionally be shipped with the mail piece 16, and/or available in kiosks at retail areas, such as grocery stores for example, or be distributed by delivery service provider 12 along with the item.

As seen in Fig. 1, as indicated by arrow 56, the article 24 and new packaging 26 are sent from the first intended recipient 20 to the delivery service provider 12 as a second mail piece 62. When the second mail piece 62 is mailed by the first intended recipient 20 it preferably does not contain a human readable form of the intended new delivery address on the new packaging or a human readable form of the intended new delivery address viewable from the exterior of the mail piece 62. The first mail recipient might not know where the second mail piece 62 was actually going to be delivered. However, in an alternate embodiment, the first intended recipient might attach an address label to the second mail piece 62, such as if downloaded by the first intended recipient's computer or home entertainment center; the label having the delivery address of the subsequent intended recipient. Alternatively, the packaging could have the address of the owner/renter as the delivery address which is only intended to be used as the delivery address if the delivery service provider does not re-address the mail piece as instructed by the owner/renter.

Referring also to Fig. 6 and Fig. 4, when the second mail piece 62 is received by the delivery service provider 12, the scanner system 42 can be used to scan 64 the second mail piece 62 and read the article identification 38 again. The delivery service provider 12 can then determine 66 the intended delivery address of the second mail piece 62 by use of the delivery address determinator system 44 and communication system 46 again.

In a preferred method, similar to the method described above, as indicated by arrow 19 in Fig. 1 the owner/renter 14 communicates another electronic file 50 to the communicator system 46. The new electronic file 50 preferably comprises a correlation or list of article identifications relative to delivery addresses. Thus, by reading the article identification 38 of the mail piece and receiving the electronic file by the communicator system 46, the delivery address determinator system 44 can use these two pieces of information to determine the intended delivery address of the mail piece 62. Alternatively, the delivery address determinator system 44 could use the communication system 46 to query the owner/renter 14 where the mail piece 62 should be addressed to. Similar to that described above, the addressor system 48 can be used to place the delivery address on the exterior of the envelope 26 of the mail piece 62, for example, such as by printing a label with the delivery address and placing the label on the envelope. The delivery service provider 12 can then deliver 67 the mail piece 62 to the subsequent intended recipient 68 as indicated by arrow 70 in Fig. 1. Thus, the same article 24 can be used by the first intended recipient 20 and subsequently sent to a subsequent intended recipient 68 without returning the article 24 back to the owner/renter 14.

No intermediate return and re-distribution center operated by the owner/renter 14 is needed. Instead, the method uses the delivery service provider 12, such as the USPS for example, as a return and re-distribution center in combination with the address determination method. This can alleviate the owner/renter 14 from having to operate return and re-distribution centers. This can obviously save a considerable amount of money. The delivery service provider 12 can also charge the owner/renter 14 for the service they provide. Delivery of the article 24 between recipients 20, 68 can be accelerated versus otherwise having to ship the mail piece 62 to and from an intermediate return and re-distribution center, such as the owner/renter 14 itself. Alternatively, if accelerated deliver is not desire, the path of the mail piece 62 used by the delivery service provider 12 can be selected to delay delivery. This could be used to control inventory in the delivery stream 18, 22, 56, 12, 70, 78.

As seen in Fig. 6, when the delivery service provider 12 transfers the mail piece 62 from the first intended recipient 20 to the subsequent intended recipient 68, the provider 12 can apply an address to the mail piece 62 as indicated by block 72, send at least one communication as indicated by block 74, and/or invoice as indicated by block 76. The communication 74 can be by any suitable means and can be with any suitable party, such as the owner/renter 14, the first intended recipient 20, and/or the subsequent intended recipient 68, for example. For example, the communication 74 could be with the owner/renter 14 indicating that the first intended recipient 20 has re-deposited the article 24 back into the deliver/mail stream, or requesting approval of delivery charges to the next destination. The owner/renter 14 could also use this information to determine the length of time the recipient 20 had possession of the article 24. Such information could be used to calculate time based rental charges (e.g., per day fees or late fees). The owner/renter 14 could respond to that communication with instructions for subsequent delivery of the mail piece 62 to its next intended destination. The communication could be with the subsequent intended recipient 68 indicating that the article in the mail piece 62 is on its way to the subsequent intended recipient 68. The communication could be with the first intended recipient 20 indicating receipt of the mail piece 62. These are only some examples. There could also be communications with third parties, such as the creator of the content of the article (a motion picture studio for example) or an advertising firm for marketing data to help promote sales or rentals of the article, or report distribution to support royalty payments.

Referring also to Fig. 14, some examples of communication links among the parties and their equipment are shown. Fig. 14 shows the communications link 19 as a two-way communications link between the two computers 140, 142. Equipment of the rentee 20, 68 can have communications links 168, 170 to and from the renter computer 140 (which could be a single two-way communications link) and communications links 172, 174 to and from the delivery service provider computer 142 (which could be a single two-way communications link). Equipment of a third party 166 can have communications links 176, 178 to and from the renter computer 140 (which could be a single two-way communications link) and communications links 180, 182 to and from the delivery service provider computer 142 (which could be a single two-way communications link). Equipment of the rentee 20, 68 can have communications links 184 to and from the third party 166 (which could be a single two-way communications link). In alternate embodiments, all of these links might not be provided.

Referring back to Fig. 6, the invoicing 76 could be to the owner/renter 14 prior to delivery to the subsequent intended recipient or could be automatic debiting for example. Alternatively, the first intended recipient 20 could be invoiced or the subsequent intended recipient 68 could be invoiced or otherwise charged the delivery charges by the delivery service provider 12, such as a credit card charge. These are only some examples.

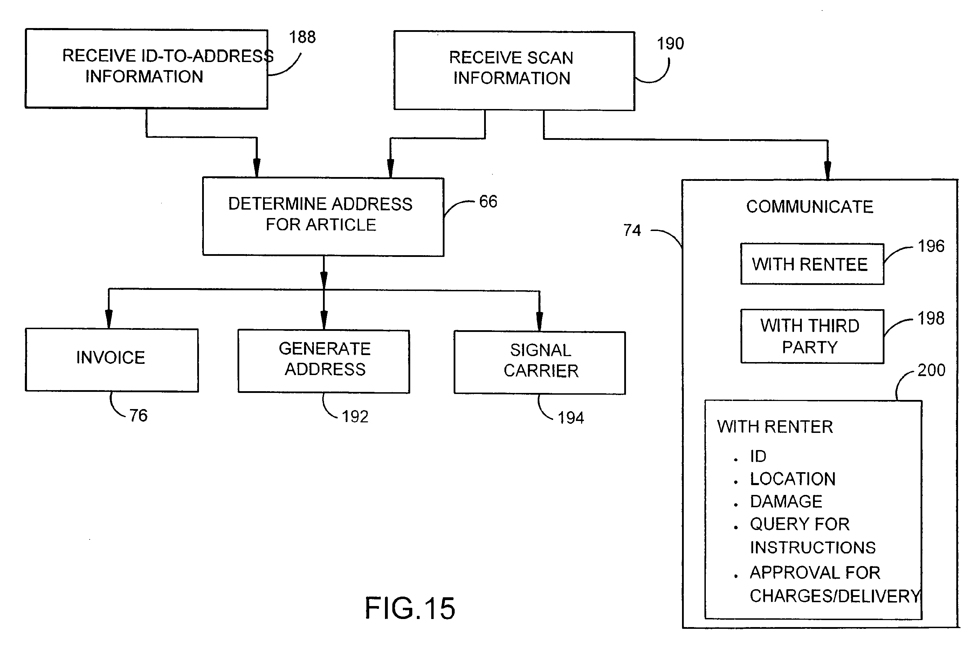

Referring to Fig. 15 and Figs. 6, 11 and 12, the equipment at the delivery service provider 12 is adapted to receive 188 the ID-to-Address information at the second input 152 and receive 190 the scan information at the first input 150. The computer 142 can use this data to determine 66 the address for a scanned article. The equipment of the delivery service provider can then perform such tasks as invoicing 76, generating 192 the address for the article, and perhaps signaling 194 a in the field carrier who has the article. In addition, the equipment can communicate 74 with others, such as with a rentee as indicated by block 196, a third party as indicated by block 198, and/or the renter as indicated by block 200, including data such as article ID, article location, article damage, a query for instructions, and/or a query for approval of charges or delivery. These are only some examples and should not be considered as limiting.

As seen in Fig. 1, similar to that shown with respect to arrow 56, when the subsequent intended recipient 68 is finished with using the article 24 or otherwise wants to end possession of the article, the article can be returned to the delivery service provider 12 as indicated by arrow 78. However, entry of the article back into the delivery stream again could be optional. This is described in more detail below. In most circumstances, the subsequent intended recipient 68, similar to the first intended recipient 20, will re-introduce the article back into the delivery stream as shown by arrow 78 as a new mail piece. Thus, the subsequent intended recipient 68 can use the process as shown in Fig. 5 similar to the first intended recipient. Similar to the first intended recipient 20, the owner/renter 14 can send the first intended recipient 20 blank envelopes 26 as indicated by arrow 61 in Fig. 1 for repackaging 58.

When the new mail piece is received by the delivery service provider 12 from the subsequent intended recipient 68, the method described above with respect to Figs. 4 and 6 can be repeated for delivery of the article as a new mail piece to another new subsequent intended recipient 68. Steps 70 and 78 can be repeated as many times as desired without the article ever having to be returned to the owner/renter or an intermediate return and re-directing center. The owner/renter 14 merely communicates to the delivery service provider 12 where the subsequent delivery address for the new mail piece is each time the article is returned to the delivery service provider 12. Again, the delivery service provider 12 can query for this delivery information or the owner/renter can automatically supply the information, such as on a regular or periodic schedule for example.

The method can comprise determining a second mail piece delivery address of a second mail piece having the product therein, based upon the mail piece identifier, comprising comparing the mail piece identifier to information supplied by an owner of the product to a delivery service provider. Determining a second mail piece delivery address of the mail piece can occur after delivery of the first mail piece to the first mail piece delivery address. Determining a second mail piece delivery address of the second mail piece can comprise determining a general location of the mail piece when the second mail piece enters a delivery stream for delivery to the second mail piece delivery address. Determining the first mail piece delivery address can be accomplished, at least partially, by the delivery service provider, and the method can further comprise, after determining the first mail piece delivery address, placing a human readable form of the mail piece delivery address on the mail piece by the delivery service provider. Determining the first mail piece delivery address can comprise use of an algorithm including general location of the mail piece when scanned. Although use of scanning by the delivery service provider is preferred to determine actual location of the product, this is not always necessary. The location can be estimated by the renter, such as based upon an address of an immediately prior rentee.

The invention can provide a method of sequentially delivering an article to a plurality of the intended recipients. The method can comprise determining a first delivery address of the article while the article is inside a first mail piece packaging as a first mail piece; and determining a second delivery address of the article while the article is inside a second mail piece packaging as a second mail piece, wherein the article can include a machine only readable address identifier used in determining both the first and the second delivery addresses. The invention can provide a method of controlling delivery of a mail piece in a delivery stream comprising scanning the mail piece by a delivery service provider to identify the mail piece, wherein the mail piece comprises a machine only readable address identifier located inside the mail piece; determining a delivery address to deliver the mail piece to after the mail piece is scanned based upon the scanned identity of the mail piece; and communicating the scanning of the mail piece to at least one interested party. The interested party could be the owner/renter, or the rentee, or a future rentee, or an intended recipient, or any third party.

In one type of embodiment, the delivery service provider 12 could partially control selection of the delivery address. For example, the delivery service provider 12 could use an algorithm in combination with information from the owner/renter 14 to select the delivery address rather than only the owner/renter 14 selecting the precise delivery address. For example, this could be used when there are multiple copies of the article in the delivery stream of the delivery service provider 12 at different locations and different subsequent intended recipients requesting the article at different locations. For example, the algorithm could allow the delivery service provider 12 to send a first copy of the article from New York City to Harford, Connecticut or New Haven, Connecticut, and a second copy of the article from Boston, Massachusetts to the other location. This gives the delivery service provider 12 partial control over inventory shipments that were heretofore unavailable. This could enable the delivery service provider 12 to control its delivery assets more efficiently, but still allow proper delivery of copies of the articles to their intended recipients in a timely manner.

To improve the situation noted in the background section above, a company/owner can work collaboratively with a carrier (delivery service provider) to use the carrier's logistics system for inventory control. In a preferred embodiment, the carrier's logistics system would allow for delivering an item to a first customer, receiving the item back from the first customer 20 as part of the return process, and again delivering the item to a second customer 68 before returning the item to the company/owner 14. To achieve this, the carrier 12 could scan an identifying code on the reply envelope which identifies the item and provide this and potentially other information (date, time, location, etc.) to the company. Then, the company could provide an instruction to the carrier as to where to route that item; either to a subsequent customer or a company distribution center.

Since the company knows when the returning item is inducted into the carrier's system, the company has confirmation earlier than provided in previous article mail re-entry methods that the customer has started the return process. With this earlier confirmation by the delivery service provider to the company, this allows the company to dispatch a next item to the customer without waiting for the actual receipt of the returning item. Since the company can dispatch the returning item to a second customer by instructing the carrier, the company needs less:
• (i) storage space at the distribution center;
• (ii) people at the distribution center to process incoming and outgoing items;
• (iii) inventory because the item spends less time in transit and handling at the distribution center.

Carriers can also charge increased fees associated with this service. With the invention, a company does not have to develop a core competency of material handling and processing of incoming and outgoing items. Instead, the company 14 can use carrier(s) 12 which have already built a sophisticated network for this purpose. The carrier's logistics infrastructure can become a virtual inventory system for the company. The invention can facilitate the redirection of merchandise within a carrier network; eliminating (or at least drastically reducing) the need for returns processing facilities.

A merchandise owner can place tracking identification numbers (e.g., PLANET codes, 4-state codes, linear barcodes or RFIDs) on merchandise that is transported via a carrier. When the carrier reads the tracking number, ideally at induction into the delivery stream, the information can be transmitted to the merchandise owner. The merchandise owner can instruct the carrier where to ship the merchandise. The location may be specific (e.g., a physical address) or general (e.g., a specific processing center operated by the carrier). In the case of a general address, the merchandise owner can instruct the carrier of an additional specific address at a later time and before delivery. Thus, there could be temporally spaced directions from the owner/renter 14 to the carrier 12 in a single delivery routing.

Delivery service provider induction addressing of items optimizes a number of businesses. Rental inventories may be turned more efficiently (rapidly and without handling at a central warehouse) by redirecting them directly to another renter when they are returned (delivered with the delivery service provider by the rentee). Merchandise may be pre-shipped to various general locations (e.g., postal processing centers) in speculation of demand, and perhaps re-routed prior to delivery to the general location or held at the carrier's facility before subsequent delivery to subsequently identified delivery addresses. With this type of pre-positioning of the items in the delivery stream, purchasers of the items could then get next day delivery. For example, an internet retailer, such as Amazon.com for example, could ship an about to be released book to several carrier distribution centers and offer next day delivery, or potentially same day delivery, on the release date. This could enable online retailers to compete with physical retail outlets from a temporal view point of delivery. Additionally, returned merchandise could be shipped/redirected to a new purchaser without the need to return the merchandise to a central location. Finally, charities could accept donations of goods via mail and redirect them to buyers without ever having to handle the item.

For the rent-by-mail industry, there could be:
• Up to 1/3 more revenue per item in inventory;
• Decreased inventory costs as stock per customer ratio decreases;
• Increased customer loyalty due to fewer out-of-stock conditions for lending libraries, limited direct financial benefit, providing an additional but intangible value;
• Improved control of inventory (possibly reduced losses in transit);
• Improved customer satisfaction through predictable availability for distance marketers;
• Reduced labor costs though automation of return merchandise authorizations (RMA);
• Reduced labor costs though more efficient capacity planning and automation.

With the number of DVD players growing from about 55.9 million U.S. households in 2002 to about 97.6 million in 2007, annual spending on DVD rentals are expected to soar from $3.2 billion to $8.4 billion during the next five years, according to Adams Media Research of Cannel, California. Rent-by-mail represents a significant trend in the industry. The DVD rent-by-mail business model is sensitive to time savings because 70% of the lifetime rental value of a DVD is earned within the first six months of issue. If days in transit can be reduced, days in customer hands (and hence, days generating revenue) can be increased.

Distance marketers, including catalog retailers and other mail order marketers, often require advance authorization for merchandise returns. Each return merchandise authorization (RMA) requires a customer service call, which is estimated to cost anywhere from $1 - $15. Intelligent Mail could provide an automatic RMA.

For business models that anticipate sales returns through the mail, companies could provide the consumer with bar coding or tagging that identifies the merchandise to be returned. The return carrier can read the bar code or tag at induction of the article into the delivery stream. The carrier can make this information available to the company. The company can use this information to direct the merchandise re-introduced into the delivery stream to another sales customer while the merchandise is in transit in the delivery stream, or anticipate and prepare to handle the merchandise when it is subsequently delivered to the company by the carrier. Two parts of the system can include merchandise tagging and carrier data capture and reporting. Redirection in transit can add considerable value to rental verticals.

Parcel tagging already exists, but does not solve the problem of partial returns, such as a single item from a mail order or a single DVD from a multi-DVD rental. With the invention, a single item from a multi-item shipment can be sent/returned with great accuracy and earlier confirmation/notification. Therefore, the coding/tagging solution might range from bar-coded stickers that the consumer can affix to the parcel, or RFID tags that can be read through the parcel for example.

A system similar to the USPS CONFIRM system could be used to allow the induction worker for the post and/or private carrier to scan or read the bar code or tag. In addition to parcel-specific information that is captured today, the scan could capture merchandise-specific information, such as a Stock Keeping Unit (SKU). Reporting could take place over the Internet through secure sites.

Redirection in transit could be provided. This feature could resemble mail forwarding, except that it could require input from the company/owner 14, such as interactive input for example. The post or carrier could develop a system to tie its logistics system to the company's logistics system. The company could designate what would, in effect, be a temporary change of address for a single piece of merchandise. The goods could be directed to the next customer in line for a DVD title, to a refurbishing center for processing, or to a specified warehouse or retail location to balance inventory levels within a chain, for example. The post or carrier would generate and apply a corrected address label, and could deliver the merchandise to the requested address. Redirection could be a general redirection, such as all products should be redirect to inventory location X, or could be a specific redirection related to renter motivation, such as based upon a rentee canceling a rental order, a rentee not paying a bill, a rentee having bad credit, or a rentee becoming classified as a "bad rentee" because of prior damage to rental articles for example. In these specific redirection situations, a rental article initially designated for the specific rentee can be redirected to a new different rentee or different location. The redirection can be motivated based upon specific rentee/customer behavior or status. The general redirection could be based upon factors other than specific rentee/customer behavior or status.

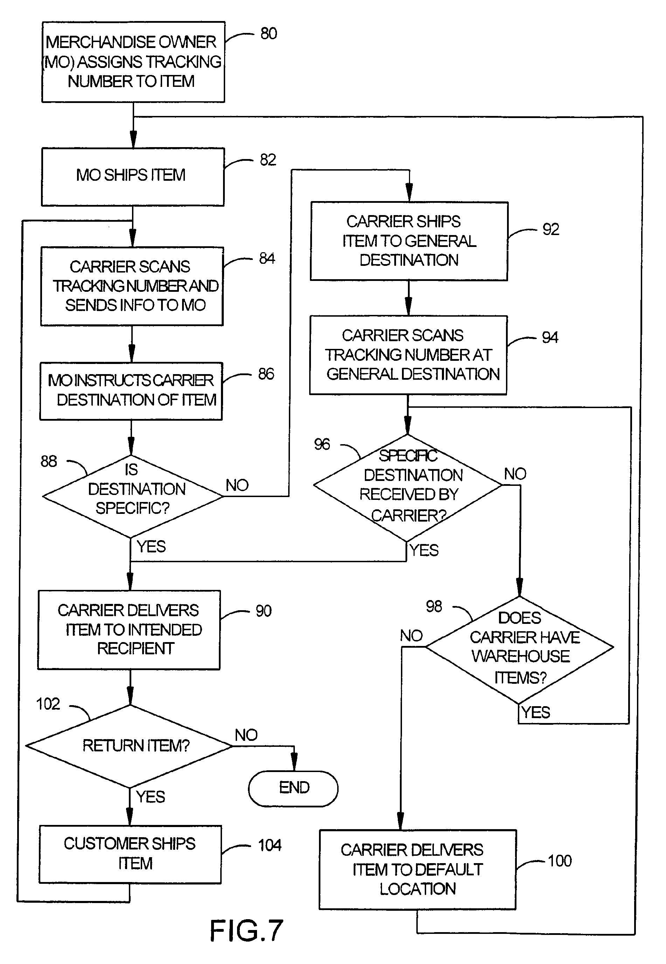

Referring also to Fig. 7 there is shown a flowchart which illustrates one method of operation of the invention. A Merchandise Owner (MO) can assigns a unique tracking number to an item as indicated by block 80. Ideally the tracking number is in a form already recognized by the carrier that will deliver the item. The item is then packaged for shipment with the tracking number affixed. The number may be:
• printed on the packaging (e.g., in a PLANET, 4-state or delivery confirmation code),
• printed on the item and viewed through a window in the packaging, or
• contained in an electronic device such as an RFID or contact-less smart card placed within the packaging or on the item.

The MO then ships the item As indicated by block 82. The carrier scans 84 the tracking number from the item and reports the presence of the item to the MO. The MO can then determine the destination of the item and communicates 86 the destination to the carrier. It should be noted that the destination of an item may also be pre-communicated to the carrier. This will most likely be the case for an initial shipment. However, the invention enables the MO to instruct the carrier of an item's destination after the carrier has begun processing the item; after the item is in the delivery stream. This could be important for customer shipped items (e.g., return merchandise, rental merchandise return or re-introduction into the delivery stream, charitable donation, etc.), since the MO may not know when or where the merchandise will re-enter the carrier's delivery stream or network.

The destination of the item may be specific (e.g., a street address) or general (e.g., a postal sorting facility). A determination may be made of the specific/general nature as indicated by block 88. General addressing may be used in cases where the MO desires to pre-position merchandise into certain areas where a demand for the merchandise is anticipated in the near future.

If the destination is specific the carrier delivers the item to the intended recipient as indicated by block 90. If the destination is not specific the carrier ships the item to the general location as indicated by block 92. Once the item arrives at the general location, the carrier can scan the tracking number again as indicated by block 94. A determination can be provided whether or not a specific destination has been received by the carrier as indicated by block 96. If the MO has provided a specific destination for the item, the carrier can deliver the item to the intended recipient as indicated by block 90. If the MO has not provided a specific destination for the item, the carrier may store the item for the MO or deliver the item to a default location (e.g., the MO's warehouse or nearest distribution center) as indicated by blocks 98 and 100. The default location could be encoded on the item or package containing the item (e.g., in a 4-state barcode along with the tracking number). This would ensure that all items were directed to the MO unless a specific instruction was communicated to the carrier to redirect an item elsewhere.

After a customer receives an item they may keep the item or return the item as indicated by block 102. The item may be returned as a return of rental inventory or due to problems with or lack of desire for the item. To return the item the customer simply ships the item as indicated by block 104. Once the carrier receives the item it can scan the tracking number and informs the MO. The MO can then specific a new destination of the item and the process can repeat itself.

As noted above, and as seen in Fig. 1, when the subsequent intended recipient 68 is finished with using the article 24 or otherwise wants to end possession of the article, the article can be returned to the delivery service provider 12 as indicated by arrow 78. However, entry of the article back into the delivery stream again could be optional. For example, when the subsequent intended recipient 68 desires to retain ownership or possession of the article, the subsequent intended recipient 68 could arrange to purchase the article from the owner/renter 14, such as when the subsequent intended recipient 68 is a retail store outlet or just an individual interested in keeping the article. As another example, the owner/renter 14 could give ownership of the article to the subsequent intended recipient 68 as a promotional activity. As another example, the owner/renter 14 could request the subsequent intended recipient 68 not to re-send the article back into the delivery stream because of actual or predicted wear or damage of the article.

Coding on the article could include information about who will be billed for delivery charges. To protect against misuse, the mailer (e.g. owner/renter 14) could provide a list of individual articles for which delivery charges are authorized. MAIL.DAT® implementation could be used with the initial mailer providing a manifest to the delivery service provider with re-routing instructions. An email, or other communication, could be sent to the article owner and/or the recipient when a mail piece containing the article is scanned by the delivery service provider, such as when the article enters or re-enters the delivery stream. The delivery service provider can scan the code on the item and report presence of the item, and location of item, as well as other parameters if desired. The rental service or owner can identify new intended recipients to be served directly when the delivery service provider reports possession of the item.

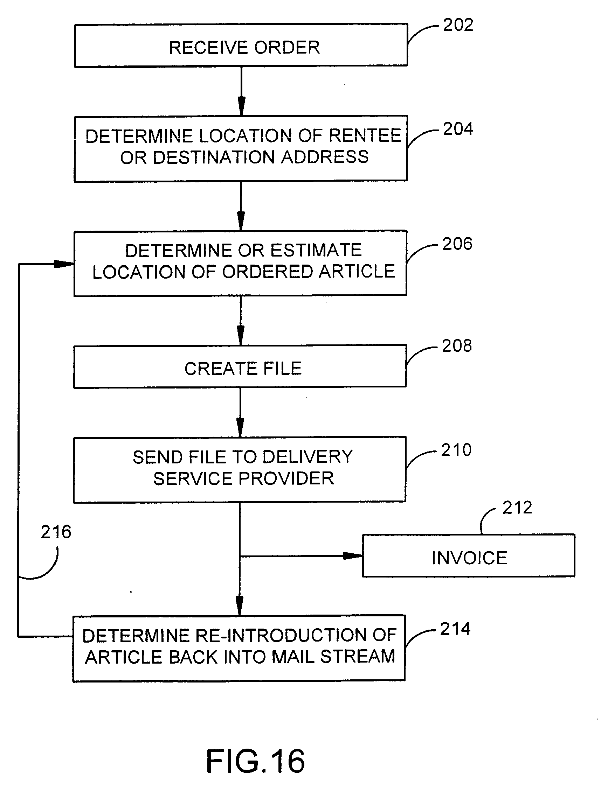

Referring also to Fig. 16, and Fig. 13, the equipment at the renter is able to receive 202 an order from the rentee at the second input 158. The equipment can determine 204 the location of the rentee, such as from previously stored rentee data in the memory 162, or the desired destination address of the article from the data input into the input 158 from the rentee. The renter's equipment can determine or estimate the location of the ordered article (or a copy of the ordered article) as indicated by block 206 based upon location information such as scanned location information input into the first input 156 from a communication from the delivery service provider 12, or a prior rentee's location for example. The equipment of the renter is able to create a file as indicated by block 208 and send or deliver that file to the delivery service provider as indicated by block 210. The file can comprise ID-to-address information for one or more articles. The equipment of the renter is able to invoice 212 the rentee and, as indicated by block 214 determine re-introduction of the article back into the mail stream. After the renter's equipment determines that re-introduction has occurred, it can return to block 206 as indicated by line 216 for processing an additional order for the article from another rentee.

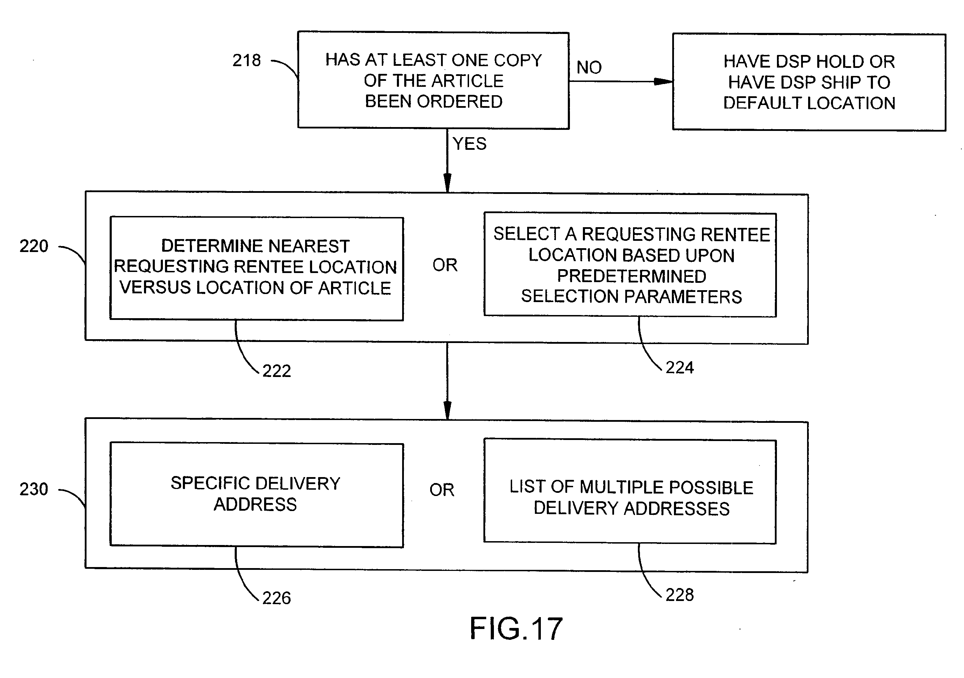

Referring also to Fig. 17, an example of some steps the renter's equipment can use to create the file as indicated in block 208 is shown. In this example, the renter's equipment determines 218 if at least one copy of an article has been ordered. If not, then the file can instruct the delivery service provider (DSP) to hold the article until an order is received, or ship/deliver the article to a default location (such as back to the renter for example, or to a storage facility or servicing facility for example). If there is an outstanding order, as indicated by block 220 the renter's equipment can determine 222 the nearest requesting rentee's location versus the location of the article, or select 224 a requesting rentee's location based upon predetermined selection parameters. The predetermined selection parameters can include, for example, location of the article and location of the requesting rentee. The file can be formatted, as indicated by block 230, with a specific delivery address for each article ID as indicated by block 226 or a list of multiple possible delivery addresses for each article ID as indicated by block 228. If the file has multiple possible delivery addresses for each article ID the DSP can select the actual delivery address for each article based upon this list.

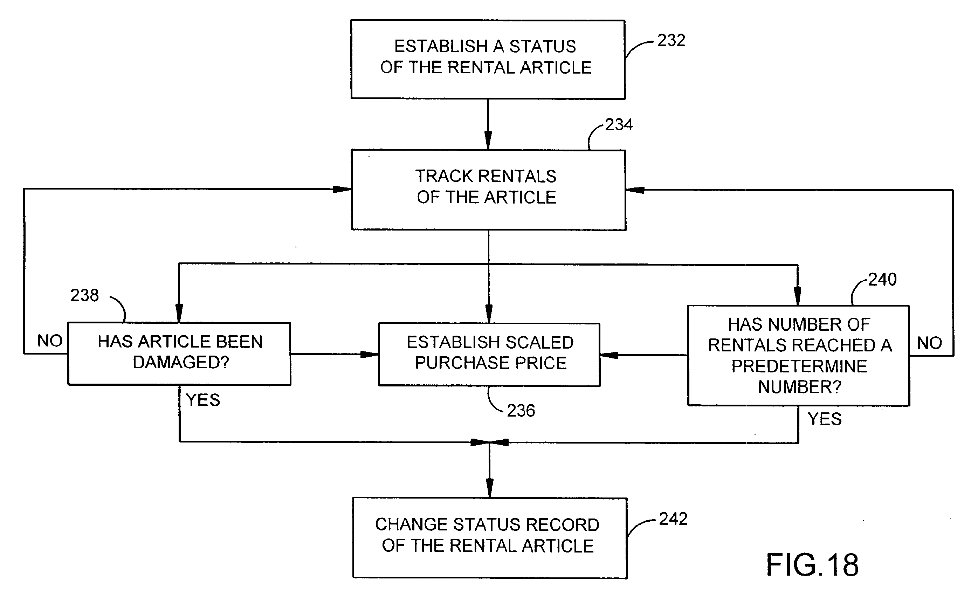

Referring also to Fig. 18, a status of an article can be recorded or maintained in the renter's computer 140. As indicated by block 232 a status of the article is initially established in the renter's computer. Rentals of the article are then tracked by the renter's computer as indicated by block 234. As part of the tracking, the renter's computer can use input as to whether or not the article has been damaged as indicated by block 238, and whether or not a number of rentals ahs reached a predetermined number as indicated by block 240. The renter's computer can establish a scaled purchase price for the article as indicated by block 236 which can include input from the damage and rental number blocks 238, 240. If the rental article has been damaged or the number or rentals has reached the predetermined number, the computer can be programmed to change the status record of the rental article as indicated by block 242. This is merely an example and should not be considered as limiting.

Fig. 7 describes the process of an MO directing an item to a general location and then a specific location. However, it is possible for an MO to direct an item to several general locations prior to informing the carrier of a specific destination. These general locations might be a series of jumps which move the item closer to it's intended (specific) destination. Such an arrangement might be particularly useful for international shipments where more than one carrier is involved. Such a capability might also be useful to simply revolve inventory within the carrier network. Carriers may not want to serve as a "holding pen" for inventory and could charge additional fees to discourage such behavior on the part of merchants.

Optimization matching could be sent to the delivery service provider such as in a MAIL.DAT® file. Optimization matching could comprise use of an algorithm for matching customers desiring an article with the articles in the delivery stream. Optimization matching can include such factors as location of the article, location of the customer, time for delivery (slow down or speed up), distance for the article to travel, cost of the delivery service, prior use by customers desiring the article, or any other suitable matching parameter. The delivery service provider can charge less for delivery of items which are re-distributed locally. This could obviously save the owner/renter delivery costs. The algorithm can also take into account that people in remote locations should not be shut out of the system because of redistribution within more populated areas. Individuals can provide a profile of themselves, about interests, and provide it to the delivery service provider. If virtual inventory of marketing material from above has extra articles, the delivery service provider can determine whether there is someone with a matching interest who can receive the material.

The product can be transported from the first intended recipient without addressing the product to the second intended recipient by the first intended recipient when the mail piece containing the product is placed in the second delivery stream. The first delivery stream could comprise use of a government postal service or a courier service. The method can comprise scanning the mail piece by the delivery service provider for a mail piece identifier (perhaps in the form of the article identifier), wherein the mail piece identifier is on the product and inside a mail piece packaging which forms the mail piece. The method can include determining a mail piece delivery address for the second intended recipient based upon the mail piece identifier. The mail piece does not need to contain a human readable form of the mail piece delivery address thereon which can be read from an exterior of the mail piece. The product or article can comprise a machine readable entertainment storage medium, such as a DVD for example. The method can comprise delivering mail piece packagings to a first intended recipient at the first mail piece delivery address, wherein one of the mail piece packagings is used in transporting the product to the second intended recipient. Delivering mail piece packagings to the first intended recipient can be separate from transport of the product to the first intended recipient and can occur based upon a pattern of use of the packaging by the first intended recipient. The first intended recipient can be presented with marketing information with the delivering of the mail piece packagings to the first intended recipient.

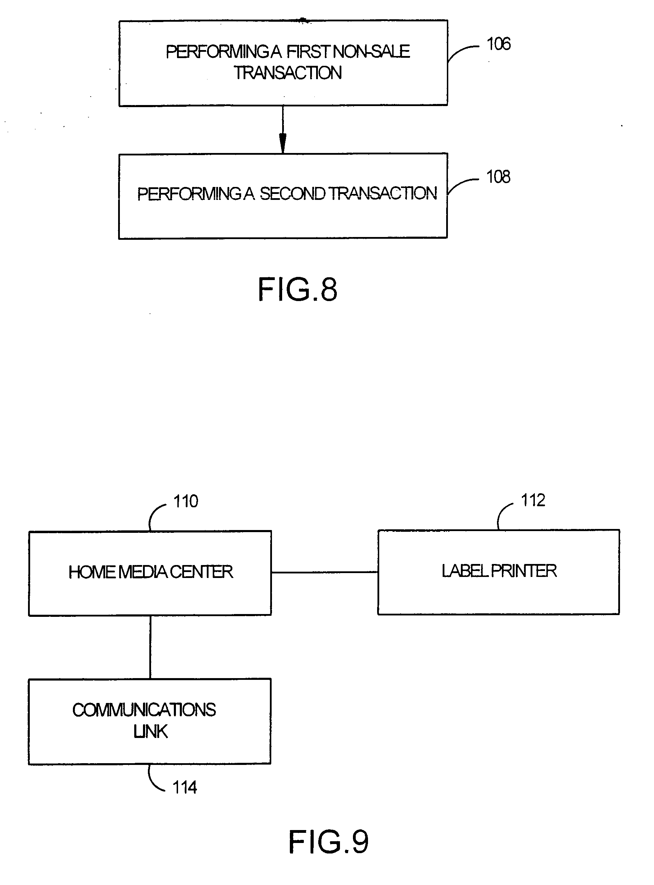

Referring also to Fig. 8, one method of the invention can comprise performing a first non-sale transaction as indicated by block 106, and then performing a second transaction as indicated by block 108. The first transaction 106 can comprise having the article transported through a first delivery stream to a first intended recipient for use by the first intended recipient, and receiving payment from the first intended recipient. This could be a rental of the article for example. The second transaction 108 could comprise having the article transported through a second delivery stream (which could be by the same delivery service provider or a different delivery service provider) from the first intended recipient directly to a second intended recipient by the delivery service provider, and receiving payment from the second intended recipient. This could also be a rental of the article, or could be a sale of the article.

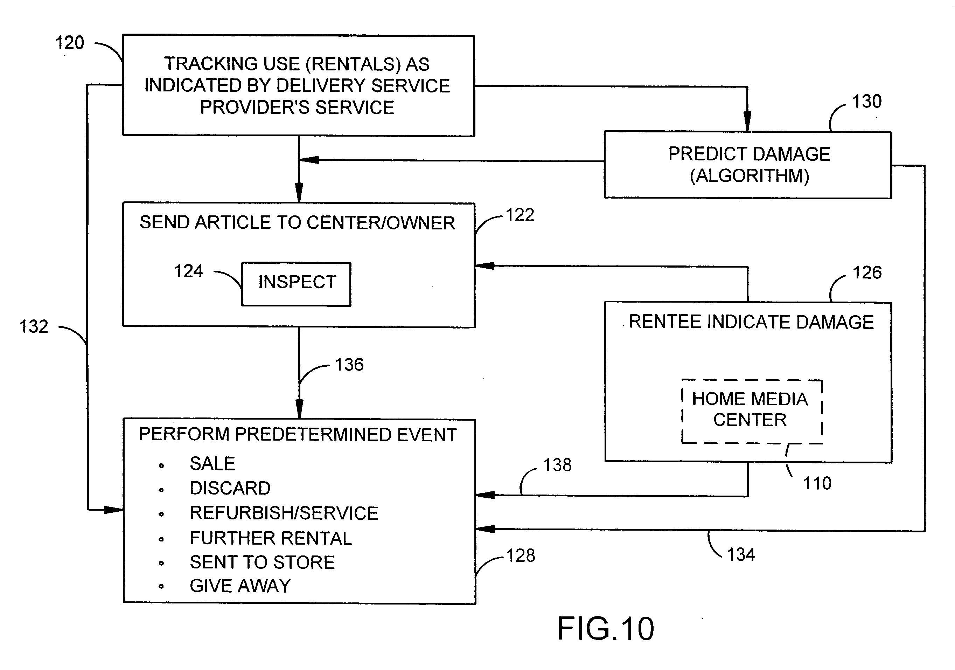

Referring also to Fig. 10, one of the features of the invention can be a system and method for addressing the problem of when an article, such as a rental DVD for example, becomes damaged or is potentially damaged. With the invention, tracking 120 how many customers have used the article can be provided. The system and method can include automatically sending 122 the item back to a distribution center or the owner after the article has been used by a threshold number of recipients. The distribution center or owner can then inspect 124 the article to determine if it is damaged and to determine fitness for further rental, or for sale as a used article. Alternatively, old or damaged articles can be discarded.

A system and method can be provided to include a way for a customer to indicate 126 that an item is damaged such as, for example, via the Internet, a marking or indication on an envelope such as a checkbox, or by means of a DVD player such as a Home Media Center 110 having an electronic communication capability, such as to the Internet for example. For example, referring also to Fig. 9, the user/rentee could have a Home Media Center 110 connected to a printer 112 and a communications link 114. The user/rentee could print a delivery address label with the printer 112 as directed by the Home Media Center 110 and instructions received from the owner/renter over the communications link 114.

If an indication is provided on the envelope by the user/rentee, the delivery service provider can scan the envelope and can inform the owner. The owner can then direct the delivery service provider that the item is to be returned to the owner or the distribution center, or to dispose of it. For an article such as a DVD, it might be viewed in a media device that is connected to the Internet. If the DVD is damaged, then a message can be automatically sent to owner/renter with the damage status. Next time the DVD enters into the delivery stream of the delivery service provider, the owner can instruct the delivery service provider to return the mail piece containing the DVD to the owner/renter or to a distribution center, or to discard the mail piece with the article. A new copy of the DVD can be immediately sent to the rentee by the owner/renter when the owner/renter is notified by the delivery service provider that the DVD has been received by the delivery service provider.

The action upon a threshold number of uses/rentals of the article could be to inspect 124 and/or perform a predetermined event 128 such as discard, sell, further rental, send to a store, or give away as a gift for example. Variables or parameters for predicting 130 damage can include, for example, use of the article by bad users, use of the article by good users, the number of prior customers that have used the article, the climate of the region where the article is located, the time of year, the quality of the delivery handlers (good/bad), the quality of the type of packaging (good/bad), and the region where the article is located (city/suburb/rural) (northeast/southeast/etc.). These are only some examples. Other suitable variables or parameters could be used.

An algorithm could also be provided for analyzing patterns of damage by individual users. Some users might damage the rental article more than other users. Thus, customers could be given a classification or rating. The algorithm could adjust acceptable usage levels for the articles, such as DVDs for example, based upon how many "bad" customers use it. Bad customers could also be cancelled.

With the invention, a method of processing a rental article can be provided comprising renting the rental article to a plurality of consecutive rentees by a renter without returning the rental article to the renter; tracking a number of the consecutive rentees which the rental article has been rented to; and upon the number of consecutive rentees, which the rental article has been rented to, reaching a predetermined number, performing a predetermined event regarding the rental article. Performance of the predetermined event 128 could be based upon tracked uses 120 as indicated by line 132, and/or predicted damage 130 as indicated by line 134, and/or by inspection 124 as indicated by line 136, and/or by user indication as indicated by line 138. A system for determining when to remove a rental article from a consecutive rentee rental stream can be provided comprising a tracking system for tracking how many rentees have rented the rental article without the rental article having been returned to a renter of the rental article; and a system for removing the rental article, at least temporarily, from the consecutive rentee rental stream upon a number of the rentees of the rental article reaching a predetermined number.

With the invention, a method of renting a rental article can be provided comprising renting the rental article to a plurality of consecutive rentees without returning the rental article to a renter of the rental article between rentals to the rentees; and identifying damage to the rental article comprising notifying the renter of the damage before the rental article is returned to the renter. A system for renting a rental article can be provided comprising a system for sending the rental article from a first rentee to a second rentee without returning the rental article to a renter of the rental article; and a system for making a notification of damage to the rental article before return of the rental article to the renter.

It is also possible to use the invention with a prediction of damage as indicated by block 130 in Fig. 10. A method of predicting damage to a rental article can be provided comprising tracking movement of the rental article among rentees of the rental article; and estimating damage to the rental article based upon the movement of the rental article among the rentees. This can be provided in a program storage device readable by a machine, tangibly embodying a program of instructions executable by the machine for performing operations to predict damage to a rental article, the operations comprising tracking movement of the rental article among rentees of the rental article; and estimating damage to the rental article based upon the movement of the rental article among the rentees. A system for renting a rental article can also be provided comprising a system for communicating by a delivery service provider to a renter information regarding receipt by the delivery service provider of the rental article from a first rentee of the rental article and delivery of the rental article to a second rentee of the rental article by the delivery service provider; and a system for predicting damage to the rental article based upon the information from the delivery service provider.

The user could have the option to buy the article, such as buying the DVD. The purchase price could be scaled based on how many times the article has been rented or used, or how long the article has been in the rental stream. For example, $20 for an article less than one year old and rented to less than 20 customers; $15 for an article between 1-2 years old and rented to less than 20 customers; $14 for an article less than one years old and rented to 20-40 customers, etc. Alternately, users could input preferences for price/usage for a list of requested movies, and movies can be shipped to them for sale when available at that price/usage level. Users might receive an email or a postcard telling about the option to keep and/or buy the item. Also, with a media center connected to the Internet, a similar message might pop up on the screen. Alternatively, the user might be notified that the DVD is being provided as a "free gift" as a membership reward. These are only some examples.

As a further alternative for used articles, such as DVDs, an algorithm could be used to instruct that the article be delivered to a local store where it can then be sold as a used article. For example, a DVD rental company might have both local storefront (brick and mortar) stores as well as an online internet rental business. The algorithm could direct the delivery service provider to deliver used DVDs from the online Internet rental business to the local storefront (brick and mortar) stores based upon one or more use, or demand, or inventory parameters. A virtual inventory network can be used to re-supply stores that may run short of in-store copies. An algorithm can be applied to determine who gets priority: a rent by mail customer, or a store that needs a copy.

The invention can use features directed to business opportunities created by a virtual inventory in a delivery stream. As an example, the invention's virtual inventory model could be used for a club that shares DVDs or CDs by mail among private people, similar to the service provided by PEERFLIX. The system and method could use blank packaging with a code on the article showing through. Instead of printing out addresses, the user would just put the DVD into the packaging and into the mail. A central database could determine the destination for the mail piece and communicate that destination to the delivery service provider.

Customers could be sent a re-supply of envelopes based on tracked usage. Also, the owner/renter can use the envelope re-supply event as a direct marketing opportunity. For example, marketing messages can be based on demographic gathered based on movie viewing habits. The re-supply could send one envelope at a time for the most direct mail opportunity. As an example, a direct marketing campaign based on a real time event, such as a sports event or a political campaign election, marketing materials can be put into virtual inventory before the event and released after the event. After the event occurs (e.g., Super Bowl, concert, elections), and based on data collected about the event, targeting by direct mail to specific individuals can occur with the items already in the virtual inventory (the delivery stream). Mobile telephone GPS can be used to identify people who may have been at a certain location.

Virtual inventory allows pre-loading of items in anticipation of a demand occurring. For example, a number of books can be put into virtual inventory (in the delivery stream) and, as orders are received, the books can be re-routed to the nearby ordering customers. For an event such as a public health threat or disaster (a hurricane for example), anticipated medicine relief supplies or similar supplies can be put into the virtual inventory (the delivery stream), and then redirected to an actual site of need as identified after the event. Thus, for example, for a hurricane expected to hit New Orleans, supplies can be shipped from California and New York towards a general destination before the hurricane hits (i.e., generally towards Louisiana or generally towards a region such as Louisiana, Mississippi and Alabama), and redirected after the hurricane hits and perhaps before for delivery to specific destinations. Alternatively, the supplies could be shipped to a specific location, such as an address in Baton Rouge, Louisiana, and redirected to a new address closer to where the hurricane actually hits land fall before the supplies reach the initial specific Baton Rouge address. The redirection information or instruction could come from the owner, the delivery service provider, or a third party. If the delivery service provider determines that a recipient is not available, then the delivery service provider can re-route the mail piece to a next recipient from a list, such as a list provided by the owner/renter. The delivery service provider can be provided with a list, and the delivery service can control sending to the next person on the list. With the invention, control for delivery address selection during routing of the articles as mail pieces from a previous user can be shared between the owner/renter and the delivery service provider, or can be solely the responsibility of the owner/renter; except perhaps with outsourcing of delivery address labeling by the delivery service provider.

With the invention, a method for controlling inventory can be provided comprising introducing a plurality of products into a delivery stream of a delivery service provider by a vendor for a rental delivery of the products to intended recipients; delivering the products to the intended recipients by the delivery service provider; and re-introducing at least one of the products back into the delivery stream by at least one of the intended recipients for a rental delivery to another intended recipient without returning the at least one product to the vendor. A method of using a delivery service provider for controlling inventory can be provided comprising introducing a plurality of products into a delivery stream of the delivery service provider; providing a list to the delivery service provider of delivery addresses of first addressees for the products to be delivered to; and updating the delivery addresses of at least some of the products with delivery addresses of new respective addressees. The updated delivery addresses of new respective addressees can be provided to the delivery service provider for allowing the delivery service provider to deliver the products to the new addressees when the products are re-introduced into the delivery stream by the first addressees.

With the invention, a method of maintaining a product in a virtual inventory after an initial shipment of the product by a vendor can be provided without returning the product to the vendor. The method can comprise delivering the product to a first intended recipient through a delivery stream of a delivery service provider; after delivery of the product to the first intended recipient, communicating by the delivery service provider to the vendor re-introduction of the product back into the delivery stream; and delivering the product directly by the delivery service provider from the first intended recipient to a second intended recipient based upon delivery information regarding the second intended recipient provided by the vendor directly to the delivery service provider. A method of using a delivery service provider to control locationing of a product can be provided comprising instructing the delivery service provider to deliver the product in a delivery stream to a first intended recipient; and when the product is re-introduced into the delivery stream from the first intended recipient, instructing the delivery service provider to deliver the product directly to a second respective intended recipient based, at least partially, upon a location of the respective product, as reported from the delivery service provider, to thereby use the delivery stream as a virtual inventory for the product between the first intended recipient and the second intended recipient.

As noted above, a portion of the invention could comprise a non-rental event. A method of offering a previously used rental article for sale can be provided comprising determining how many times the rental article has been rented; and perhaps establishing a scaled purchase price for selling the rental article based at least partially upon a number of times the rental article has been rented. A method of selling a rental article to a purchaser can be provided comprising delivering the rental article by a delivery service provider directly between rentees without returning the rental article to a renter of the rental article; and delivering the rental article by the delivery service provider directly from one of the rentees to the purchaser upon a predetermined event. A method of removing a rental article from a rental stream can be provided comprising identifying the rental article by a delivery service provider who delivers the rental article directly between rentees; and instructing the delivery service provider to deliver the rental article to a party (as part of a non-rental event).

The non-rental event could include, for example, a pre-order or a used rental article before used rental article are available, use of a list of used articles available for purchase from an owner which are in the delivery stream such as viewable on the Internet, and/or use of an Internet auction web site similar to EBay® to sell the articles which are still in the delivery stream (or at least have not been returned to the owner yet). The timing of an option to buy a used article still in the delivery stream (or at least which has not been returned to the owner yet) could be provided at any time, after time period after first introduction of the article into the virtual inventory, and/or upon invitation from the owner. The invitation could be provided by any suitable means including, for example, via a Home Media Center invitation, by post card, and/or by email. The non-rental event could be a free gift, such as for membership in an online rental service, a lottery prize, a promotional marketing give-away, or by an algorithm having any suitable selection parameters.

The invention can be directed to servicing and/ re-servicing an article. For example, a method of renting a rental article can comprise delivering the rental article by a delivery service provider between rentees without returning the rental article to a renter of the rental article; and delivering the rental article to an article service provider, between deliveries of the rental article, to two of the rentees, based upon a predetermined event. With the invention a method of delivering an article from a first user to a second user can be provided comprising transporting the article by a delivery service provider from the first user to an article service provider for servicing the article, wherein the article service provider is selected based at least partially upon proximity of the article to the article service provider; and transporting the article from the article service provider to the second user, wherein the second user is selected based at least partially upon proximity of the second user to the article service provider.

With the invention a method of delivering an article from an article service provider to a user can be provided comprising mailing the article, by use of a delivery service provider, to the user by the article service provider without the article service provider knowing an address of the user; and having the delivery service provider deliver the article to the user based at least partially upon an article identifier on the article.

The time period for servicing could be, for example, every time the article enters the delivery stream, or cyclically, or based upon an algorithm, or upon detection of a problem with the article. With this type of servicing method and system, an owner/renter can keep his customer list secret from a third party servicer. The names and addresses might only be shared with the delivery service provider. This method also allows use of a nearest virtual company component (the third party servicer) to reduce delivery costs. This can provide a virtual company component (not the owner/renter) by use of third party servicers. Servicing can include, for example, re-furbishing, cleaning, re-supplying, repairing, and/or inspecting the article by the servicer.

One example could comprise a computer printer ink cartridge. Once the cartridge is spent, it could be sent to a servicer and subsequently sent to another user without the servicer having knowledge of information regarding the first user or the subsequent second user. As another example, rented snow skies could be serviced by a third party servicer and subsequently sent to another user without the servicer having knowledge of information regarding the first user or the subsequent second user. As another example, an owner of a tuxedo could join an Internet cleaning service for sending the tuxedo out to be cleaned. Cleaning of the tuxedo could be sent to a local dry cleaner without the tuxedo owner ever knowing the identity or address of the dry cleaner and without the dry cleaner knowing the identity or address of the tuxedo owner. This type of example illustrates that the invention does not need a renter/rentee environment.

With the invention, the owner could sell its inventory to a new company without having to change labels on the articles. Owner name on the mail piece packaging might only be changed. Articles could be documents, such as books for example. The invention could be used in a peer-to-peer type of sharing, similar to PeerFlix®. Information inside an envelope can be used to ascertain a delivery address of a mail piece with different delivery addresses at different times without changing information inside the mail piece packaging.

With the invention, a method for delivering a product can be provided comprising performing a first non-sale transaction comprising having the product transported through a first delivery stream to a first intended recipient for use by the first intended recipient, and receiving payment from the first intended recipient; and performing a second transaction comprising having the product transported through a second delivery stream from the first intended recipient directly to a second intended recipient by a delivery service provider, and receiving payment from the second intended recipient. The product can be transported from the first intended recipient without addressing the product to the second intended recipient by the first intended recipient when placed in the second delivery stream.

Delivering of the mail piece packagings to the first intended recipient can be separate from transport of the product to the first intended recipient. A method of sequentially delivering an article to a plurality of the intended recipients can be provided comprising determining a first delivery address of the article while the article is inside a first mail piece packaging as a first mail piece; and determining a second delivery address of the article while the article is inside a second mail piece packaging as a second mail piece, wherein the article comprises a machine only readable address identifier used in determining both the first and the second delivery addresses. In one embodiment, no other human readable delivery address identification which might be viewable from an exterior of the mail piece is located on the mail piece prior to scanning. The mail piece might not contain a delivery address when mailed.

With the invention, a method of routing a mail piece in a delivery system can be provided comprising receiving the mail piece by a delivery service provider; initially moving the mail piece in a delivery stream of the delivery service provider towards a first delivery address; after the mail piece has at least partially completed transit in the delivery stream of the delivery service provider, scanning the mail piece by the delivery service provider to determine a mail piece identifier of the mail piece; determining a new delivery address of the mail piece by the delivery service provider based upon the scanned mail piece identifier and information supplied to the delivery service provider after initial moving of the mail piece in the delivery stream of the delivery service provider; and delivering the mail piece to the new delivery address. The mail piece does not necessarily comprise a human readable form of the first delivery address viewable from an exterior of the mail piece when received by the delivery service provider. The mail service provider could provides a human readable form of the first delivery address viewable from an exterior of the mail piece when received by the delivery service provider. Communicating a general location of the mail piece when scanned to an interested party could be provided. The determining of the new delivery address could comprise use of an algorithm including location of the mail piece when scanned to determine the new delivery address. The information supplied to the delivery service provider after initial moving of the mail piece in the delivery stream might not be sent to the mail service provider from an intended recipient of the mail piece. The information supplied to the delivery service provider after initial moving of the mail piece in the delivery stream can be sent to the mail service provider by an owner of an article inside the mail piece. The information supplied to the delivery service provider after initial moving of the mail piece in the delivery stream can be sent to the mail service provider by a mailer of the mail piece. The mail piece identifier can comprise a bar code on a product inside the mail piece, and scanning can comprise scanning the bar code while the product is inside the mail piece. The mail piece identifier can comprises a radio frequency identification tag on a product inside the mail piece, and scanning can comprise scanning the radio frequency identification tag while the product is inside the mail piece.

A system for delivering mail pieces can be provided comprising a system for scanning the mail pieces for determining a mail piece identifier inside each mail piece, wherein the mail piece of identifiers do not contain a delivery address; and a system for determining delivery addresses of the mail pieces based upon the mail piece identifier of each mail piece. The mail piece identifier can comprise a bar code, and the system for scanning can be adapted to scan the bar code while the bar code is inside the mail piece. The mail piece identifier can comprise a radio frequency identification tag, and the system for scanning can be adapted to scan the radio frequency identification tag while the tag is inside the mail piece. The mail piece identifier can comprises a code, and the system for scanning can be adapted to scan the code while the code is inside the mail piece. The system for delivering mail pieces can further comprise a system for charging an interested party a delivery fee based upon the mail piece identifier of each mail piece. The system for delivering mail pieces can further comprise a system for verifying the identifier of each mail piece. The mail piece comprises a window for optically viewing the mail piece identifier during scanning. The mail piece identifier can comprise a visual scannable identifier, and the mail piece can comprises packaging to allow insertion of an article in only one orientation to allow scanning of the identifier through a window of the packaging. The mail piece identifier can comprise a visual scannable identifier, and the mail piece comprises packaging could allow insertion of an article in only two orientations to allow scanning of the identifier through one of two windows of the packaging on opposite sides of the packaging. The system for determining the delivery addresses of the mail pieces can comprise a system for receiving an electronic file containing mail piece identifiers relative to delivery addresses. The system for determining the delivery addresses of the mail pieces can comprise an algorithm adapted to select one of the delivery addresses for each mail piece based upon at least one delivery parameter including current location of the mail piece. The algorithm can be adapted to use cost of delivery of the mail piece to a delivery address as one of the delivery parameters.

A system for controlling delivery of mail pieces by a mailer can be provided comprising a system for mailing each of the mail pieces without providing a human readable delivery address of an intended recipient viewable from an exterior of the mail piece; and a system for providing a delivery service provider with intended delivery addresses for the mail pieces corresponding to respective mail piece identifiers inside the mail pieces.

The system for mailing can comprise providing the mail piece identifier on an article inside the mail pieces. The identifier can comprises a bar code on the article viewable from an exterior of the mail piece through a window in mail piece packaging of the mail piece. The identifier can comprise a radio frequency identification tag on the article. The system for providing the delivery service provider with intended delivery addresses can comprise delivering an electronic file to the delivery service provider comprising a list or correlation of mail piece identifiers with intended delivery addresses.

A method for controlling inventory can be provided comprising introducing a plurality of products into a delivery stream of a delivery service provider by a vendor for a rental delivery of the products to intended recipients; delivering the products to the intended recipients by the delivery service provider; and re-introducing at least one of the products back into the delivery stream by at least one of the intended recipients for a rental delivery to another intended recipient without returning the at least one product to the vendor.

Introducing the plurality of products into the delivery stream by the vendor comprises depositing the products with the delivery service provider as mail pieces without delivery addresses on the mail pieces. The method can further comprise delivering the at least one product to the another intended recipient by the delivery service provider based upon the identifying information on the mail piece, wherein the identifying information on the mail piece does not include a delivery address of the another intended recipient. The method can further comprise communicating re-introducing of the at least one product into the delivery stream to the vendor. The method can further comprise electronically communicating delivery of the products to the intended recipients by the delivery service provider. The method can further comprise tracking location of the products after re-introducing the products back into the delivery stream, and electronically communicating the location of the products to the vendor. The method can further comprise tracking location of the products after introducing the products into the delivery steam and before delivery of the products to the intended recipients, and electronically communicating the location of the products to the vendor. The method can further comprise delivering an electronic file having information regarding mail pieces containing the products from the vendor to the delivery service provider. The method can further comprise determining a new delivery address for the product re-introduced into the delivery stream by the intended recipient based, at least partially, upon a location of the product, as reported from the delivery service provider, to thereby use the delivery stream as a virtual inventory for the product between the intended recipient and the another intended recipient.

The method can further comprise providing a list to the delivery service provider of delivery addresses of first addressees for the products to be delivered to; and updating the delivery addresses of at least some of the products with delivery addresses of new respective addressees, and providing the updated delivery addresses of new respective addressees to the delivery service provider for allowing the delivery service provider to thereby deliver the products to the new addressees when the products are re-introduced into the delivery stream.

A method of using a delivery service provider for controlling inventory can be provided comprising introducing a plurality of products into a delivery stream of the delivery service provider; providing a list to the delivery service provider of delivery addresses of first addressees for the products to be delivered to; and updating the delivery addresses of at least some of the products with delivery addresses of new respective addressees, and providing the updated delivery addresses of new respective addressees to the delivery service provider for allowing the delivery service provider to thereby deliver the products to the new addressees when the products are re-introduced into the delivery stream by the first addressees.

Introducing the products into the delivery stream can comprise mailing the products as mail pieces. Introducing the products into the delivery stream can comprise mailing the mail pieces with identifying information which does not including delivery addresses. Providing a list can comprise providing information in the list correlating the identifying information on the mail pieces to delivery addresses. The method can further comprise re-introducing the products into the delivery stream as mail pieces by the first addressees, wherein the mail pieces comprise delivery identifying information which does not including the delivery addresses of the new respective addressees. The method can further comprise electronically communicating the re-introducing of the products into the delivery stream to an owner/renter of the products. The method can further comprise electronically communicating the re-introducing of the products into the delivery stream to the intended recipients at the new respective addressees. The method can further comprise electronically communicating the re-introducing of the products into the delivery stream to a third party. The method can further comprise electronically communicating occurrence of delivery of the products to the first addressees by the delivery service provider. The method can further comprise tracking location of the products after the re-introducing of the products back into the delivery stream, and electronically communicating the location of the products to an owner/renter of the products. The method can further comprise tracking location of the products after introducing the products into the delivery steam and before delivery of the products to the first addressees, and electronically communicating the location of the products to an owner/renter of the products. The method can further comprise determining new delivery addresses for the products re-introduced into the delivery stream by the first addressees based, at least partially, upon a location of the product, to thereby use the delivery stream as a virtual inventory for the products between the first addressees and the new addressees. The method can further comprise providing the products as mail pieces, and coding the mail pieces with delivery identifying information to be used by the delivery service provider to determine the delivery addresses for the mail pieces, wherein the delivery identifying information does not comprise a delivery address.

A method of processing a rental article can be provided comprising renting the rental article to a plurality of consecutive rentees by a renter without returning the rental article to the renter; tracking a number of the consecutive rentees which the rental article has been rented to; and upon the number of consecutive rentees, which the rental article has been rented to, reaching a predetermined number, changing a status of the rental article. The method can further comprise, upon changing the status of the rental article, performing a predetermined event regarding the rental article.

A system for determining when to remove a rental article from a consecutive rentee rental stream can be provided comprising a tracking system for tracking how many rentees have rented the rental article without the rental article having been returned to a renter of the rental article; and a system for removing the rental article, at least temporarily, from the consecutive rentee rental stream upon a number of the rentees of the rental article reaching a predetermined number.

The system for removing the rental article can be adapted to automatically instruct a delivery service provider to delivery the rental article to a predetermined location. The system for removing the rental article can be adapted to inspect the rental article for damage at the predetermined location. The system for removing the rental article can be adapted to deliver the rental article to the predetermined location for sale. The system for removing the rental article can be adapted to discard the rental article. The system for removing the rental article can comprise a communications device at a location of a rentee which is adapted to send an electronic communication to the renter. The communications device can comprise an electronic entertainment media center. The system for removing the rental article can comprise a rentee signaled indicia on a mail piece packaging of the rental article. The system for removing the rental article can comprise an algorithm for predicting damage to the rental article. The algorithm can comprises variables selected from a group comprising use of the rental article by bad rentees, use of the rental article by good rentees, a number of prior rentees that have used the rental article, climate of a region where the rental article is located, time of year, quality of a delivery service provider who delivers the rental article between rentees, quality of a type of packaging used for the rental article, and/or a country or population region where the rental article is located. The system can further comprise a communications system for communicating delivery instructions from the renter to a delivery service provider after delivery of the rental article from the rentee to the delivery service provider and before delivery from the delivery service provider to the renter.

A system for renting a rental article can be provided comprising a system for sending the rental article from a first rentee to a second rentee without returning the rental article to a renter of the rental article; and a system for making a notification of damage to the rental article before return of the rental article to the renter. The system for sending can comprise a product identifier inside a mail piece packaging of the rental article which is adapted to be read from outside the mail piece packaging. The system for sending can comprise a system for determining the product identifier by a delivery service provider without opening the mail piece packaging. The system for sending can comprise a system for determining an address of the second rentee by the delivery service provider based upon the product identifier of the rental article and a communication from the renter. The system for sending can comprise a system for communicating by the renter to a delivery service provider an address of the second rentee based upon the product identifier.

The system for making a notification of damage can comprise a system for sending an electronic communication from a media player of the first rentee to the renter. The system for making a notification of damage can comprise a system for sending an electronic communication from a delivery service provider to the renter. The system for making a notification of damage can comprise an indicia on a mail piece packaging of the rental article deposited by the first rentee with a delivery service provider. The system can further comprise a system for estimating the damage to the rental article before return of the rental article to the rentee.

A system for renting a rental article can be provided comprising a system for receiving a communication, by a delivery service provider to a renter, of information regarding receipt by the delivery service provider of the rental article from a first rentee of the rental article and/or delivery by the delivery service provider of the rental article between the first rentee and a second rentee of the rental article; and a system for predicting damage to the rental article based upon the information from the delivery service provider.

The system for communicating can be adapted to communicate rentee indicated damage of the rental article to the renter. The system for predicting damage can comprise an algorithm. The system for predicting damage can comprise an algorithm for using the information communicated by the system for communicating to the renter.

A method of removing a rental article from a rental stream can be provided comprising identifying the rental article for a non-rental event while the rental article is in the rental stream; and modifying a record, based upon the identifying of the rental article for the non-rental event, to instruct a delivery service provider to deliver the rental article to a predetermined location.

A method of removing a rental article from a rental stream can be provided comprising identifying the rental article by a delivery service provider who delivers the rental article directly between rentees; and instructing the delivery service provider to deliver the rental article to a party as a non-rental event.

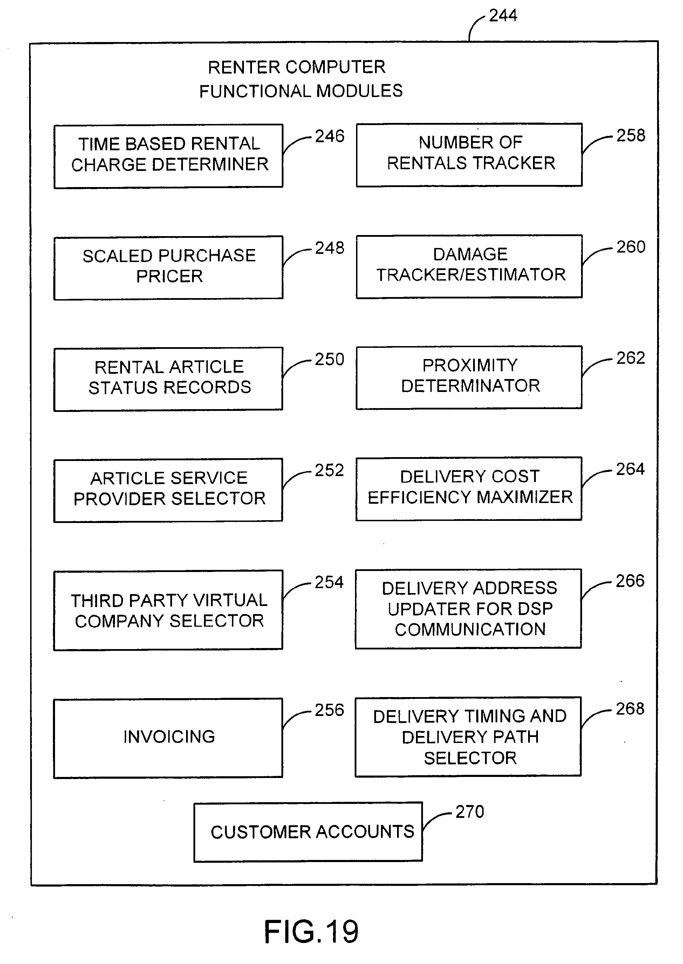

Referring also to Fig. 19, a block diagram of one example of functional modules of a renter's computer 244 is shown. In this embodiment the computer 244 comprises the following functional modules (provided through software and hardware):
a. A time based rental charge determiner 246;
b. A scaled purchase pricer 248;
c. Rental article status records 250;
d. An article service provider selector 252;
e. A third party virtual company selector 254;
f. An invoicing module 256;
g. A number of rentals tracker 258;
h. A damage tracker/estimator 260;
i. A proximity determinator 262 (article versus rentee);
j. A delivery cost efficiency maximizer 264;
k. A delivery address updater 266 for DSP communication;
l. A delivery timing and delivery path selector 268; and
m. A customer accounts module 270 for rentee data.

These are merely examples of functional modules which the renter's computer could have. In alternate embodiments, more or less functional modules could be provided. One or more of the functional modules could share common software and/or hardware components.

It should be understood that the foregoing description is only illustrative of the invention. Various alternatives and modifications can be devised by those skilled in the art without departing from the invention. Accordingly, the invention is intended to embrace all such alternatives, modifications and variances which fall within the scope of the appended claims.

## Claims

1. A method of routing a mail piece (16) in a delivery system (10) comprising:
receiving the mail piece (16) by a delivery service provider (12);
initially moving the mail piece (16) in a delivery stream of the delivery service provider (12) towards a first delivery address (20);
after the mail piece (16) has at least partially completed transit in the delivery stream of the delivery service provider (12), scanning the mail piece by the delivery service provider (12) to determine a mail piece identifier of the mail piece (16);
determining a new delivery address (68) of the mail piece (16) by the delivery service provider (12) based upon the scanned mail piece identifier and
information supplied to the delivery service provider (12) after initial moving of the mail piece (16) in the delivery stream of the delivery service provider (12); and
delivering the mail piece (16) to the new delivery address (68).

2. A method as in Claim 1, wherein receiving the mail piece (16) by the delivery service provider (12) comprises the mail piece (16) not comprising a human readable form of the first delivery address viewable from an exterior of the mail piece when received by the delivery service provider.

3. A method as in Claim 1 or 2, wherein the mail service provider (14) provides a human readable form of the first delivery address viewable from an exterior of the mail piece (16) when received by the delivery service provider (12).

4. A method as in any preceding claim further comprising, after scanning by the delivery service provider (12), communicating a general location of the mail piece to an interested party.

5. A method as in any preceding claim, wherein the determining of the new delivery address (68) comprises use of an algorithm including location of the mail piece (16) when scanned to determine the new delivery address.

6. A method as in any preceding claim, wherein the information supplied to the delivery service provider (12) after initial moving of the mail piece (16) in the delivery stream is received by the mail service provider from a mailer (14) of the mail piece.

7. A method as in any preceding claim, wherein the mail piece identifier comprises a bar code on a product (24) inside the mail piece (16), and scanning comprises scanning the bar code while the product is inside the mail piece.

8. A method as in any preceding claim, wherein the mail piece identifier comprises a radio frequency identification tag on a product inside the mail piece (16), and scanning comprises scanning the radio frequency identification tag while the product is inside the mail piece.

9. A method of using a delivery service provider (12) for controlling inventory comprising:
introducing a plurality of products (16) into a delivery stream of the delivery service provider (12);
providing a list (50) to the delivery service provider (12) of delivery addresses of first addressees (20) for the products to be delivered to; and
updating the delivery addresses of at least some of the products with delivery addresses of new respective addressees (68), and providing the updated delivery addresses to the delivery service provider (12) thereby directing the delivery service provider (12) to deliver the products to the new addressees (68) when the products are re-introduced into the delivery stream by the first
addressees (20).

10. A method as in Claim 11, wherein introducing the products into the delivery stream comprises mailing the products as mail pieces (16), and;
introducing the products into the delivery stream comprises mailing the mail pieces (16) with identifying information which does not including the delivery addresses of the first addressees.

11. A method as in Claim 9 or 10, wherein providing a list comprises providing information in the list correlating the identifying information on the mail pieces to the delivery addresses.

12. A method as in any one of Claims 9 to 11 wherein, upon re-introducing the products (16) into the delivery stream as mail pieces by the first addressees, the mail pieces comprise delivery identifying information which does not including the delivery addresses of the new respective addressees, and the method further comprises electronically communicating the re-introducing of the products into the delivery stream to an owner/renter (14) of the products, or electronically communicating the re-introducing of the products into the delivery stream to the intended recipients (20,68) at the new respective addressees, or electronically communicating the re-introducing of the products into the delivery stream to a third party.

13. A method as in any one of Claims 9 to 12, further comprising electronically communicating occurrence of delivery of the products to the first addressees (20) by the delivery service provider (12).

14. A method as in any one of Claims 9 to 13, further comprising tracking location of the products after re-introducing of the products back into the delivery stream from the first addressees (20), and electronically communicating the location of the products to an owner/renter of the products.

15. A method as in any one of Claims 9 to 14, further comprising tracking location of the products (16) after introducing the products into the delivery steam and before delivery of the products to the first addressees (20), and electronically communicating the location of the products to an owner/renter (14) of the products.

16. A method as in any one of Claims 9 to 15, further comprising providing the products as mail pieces (16), and coding the mail pieces with delivery identifying information to be used by the delivery service provider (12) to determine the delivery addresses for the mail pieces (16), wherein the delivery identifying information does not comprise a delivery address.

17. A method as in any one of Claims 9 to 16, wherein coding the mail pieces (16) comprises providing radio frequency identification (RFID) tags on the products, or marking the products with bar codes and providing packaging of the mail pieces with a window for viewing the bar code from outside the packaging.

18. A method as in Claim 17, wherein the marking comprises a luminescent marking.

19. A method as in any one of Claims 9 to 18, further comprising providing the products (16) as mail pieces, and wherein the providing of the list comprising providing an electronic file to the delivery service provider of mail information regarding the mail pieces.
